(19) Europäisches Patentamt
European Patent Office
Office européen des brevets

(11) **EP 4 170 745 A1**

(12) **EUROPEAN PATENT APPLICATION**
published in accordance with Art. 153(4) EPC

(43) Date of publication:
**26.04.2023 Bulletin 2023/17**

(21) Application number: **21825455.5**

(22) Date of filing: **18.06.2021**

(51) International Patent Classification (IPC):
*H01M 4/133* (2010.01)   *H01M 4/1393* (2010.01)
*H01M 4/587* (2010.01)   *C01B 32/205* (2017.01)

(52) Cooperative Patent Classification (CPC):
**C01B 32/205; H01M 4/133; H01M 4/1393;
H01M 4/587;** Y02E 60/10

(86) International application number:
**PCT/JP2021/023198**

(87) International publication number:
**WO 2021/256558 (23.12.2021 Gazette 2021/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.06.2020 JP 2020105303**

(71) Applicant: **ENEOS Corporation
Chiyoda-ku
Tokyo 100-8162 (JP)**

(72) Inventors:
• **SUZUKI, Takashi
Tokyo 100-8162 (JP)**

• **HIROKI, Toshiyuki
Tokyo 100-8162 (JP)**
• **WANG, Zhen
Tokyo 100-8162 (JP)**
• **IKAI, Keizo
Tokyo 100-8162 (JP)**
• **KIUCHI, Noriyuki
Tokyo 100-8162 (JP)**
• **SHIRAI, Takahiro
Tokyo 100-8162 (JP)**

(74) Representative: **Piotrowicz, Pawel Jan Andrzej et
al
Venner Shipley LLP
Byron House
Cambridge Business Park
Cowley Road
Cambridge CB4 0WZ (GB)**

(54) **ARTIFICIAL GRAPHITE MATERIAL FOR LITHIUM ION SECONDARY BATTERY NEGATIVE ELECTRODE, AND PRODUCTION METHOD THEREFOR**

(57) Provided is a method for producing an artificial graphite material for a lithium ion secondary battery negative electrode, including at least a step of performing a coking treatment on a raw material oil composition by performing a delayed coking process to generate a raw coke composition, a step of performing a heat treatment on the raw coke composition to obtain a heat-treated raw coke composition, a step of crushing the heat-treated raw coke composition to obtain heat-treated raw coke powder, a step of graphitizing the heat-treated raw coke powder to obtain graphite powder, and a step of crushing the graphite powder, in which a volatile content of the heat-treated raw coke powder is less than 3.71%, and a true density of the heat-treated raw coke powder is greater than 1.22 g/cm$^3$ and less than 1.73 g/cm$^3$.

EP 4 170 745 A1

**Description**

[Technical Field]

The present invention relates to an artificial graphite material for a lithium ion secondary battery negative electrode and a production method therefor.

Priority is claimed on Japanese Patent Application No. 2020-105303, filed June 18, 2020, the content of which is incorporated herein by reference.

[Background Art]

Lithium ion secondary batteries are used for industrial purposes such as applications for automobiles and power storage of system infrastructures.

As a negative electrode material of a lithium ion secondary battery, graphite such as an artificial graphite material has been used (see, for example, Patent Document 1).

Batteries used for applications for automobiles are used in a wide temperature range from a low temperature of 0°C or lower to a high temperature of 60°C or higher. However, a lithium ion secondary battery for which graphite is used as a negative electrode material has a problem in that lithium metal is likely to be deposited on the negative electrode when charged at a low temperature of 0°C or lower. In a case where lithium metal is deposited on the negative electrode, the amount of lithium ions that can move between the positive electrode and the negative electrode decreases. Therefore, the capacity of the lithium ion secondary battery is degraded.

It was reported that capacity degradation proceeds due to a difference in charge and discharge efficiency between a positive electrode and a negative electrode in a case where lithium metal is not deposited on the negative electrode (see, for example, Non Patent Documents 1 to 3).

[Citation List]

[Patent Document]

[Patent Document 1]
Japanese Patent No. 5415684

[Non Patent Documents]

[Non Patent Document 1]
The 51st Battery Symposium in Japan 3G15 (November 8, 2010)
[Non Patent Document 2]
"Journal of the Fuel Society of Japan", Vol. 58, No. 642 (1979), pp. 257 to 263
[Non Patent Document 3]
Carbon, 1981 (No. 105), pp. 73 to 81

[Summary of Invention]

[Technical Problem]

In lithium ion batteries obtained by using graphite as a negative electrode material, an object thereof is to suppress capacity degradation due to charging and discharging of the batteries at a low temperature of 0°C or lower. In particular, since lithium ion batteries for industrial use which are applied to automobiles and power storage of system infrastructures are required to be operated in a wide temperature range, there is a demand for a lithium ion secondary battery in which capacity degradation can be suppressed even in a case where the battery is charged or discharged at a lower temperature, and a negative electrode graphite material thereof.

The present invention has been made in view of the above-described circumstances, and an object of the present invention is to provide an artificial graphite material for a lithium ion secondary battery negative electrode, in which discharge capacity is unlikely to be degraded even in a case where the battery is repeatedly charged and discharged at a low temperature of -10°C, a production method therefor, a negative electrode for a lithium ion secondary battery, and a lithium ion secondary battery.

[Solution to Problem]

The present invention includes the following aspects.

[1] A method for producing an artificial graphite material for a lithium ion secondary battery negative electrode, including at least:

a step of performing a coking treatment on a raw material oil composition by performing a delayed coking process to generate a raw coke composition;
a step of performing a heat treatment on the raw coke composition to obtain a heat-treated raw coke composition;
a step of crushing the heat-treated raw coke composition to obtain heat-treated raw coke powder;
a step of graphitizing the heat-treated raw coke powder to obtain graphite powder; and
a step of crushing the graphite powder,
in which a volatile content of the heat-treated raw coke powder is less than 3.71 %, and a true density of the heat-treated raw coke powder is greater than 1.22 $g/cm^3$ and less than 1.73 $g/cm^3$.

[2] The method for producing an artificial graphite material for a lithium ion secondary battery negative electrode according to [1], in which a temperature of the heat treatment in the step of obtaining the heat-treated raw coke composition is 500°C or higher and 700°C or lower.

[3] The method for producing an artificial graphite material for a lithium ion secondary battery negative electrode according to [1] or [2], in which a content of normal paraffin in the raw material oil composition is in a range of 5% to 20% by mass, and an aromatic index fa acquired by a knight method is in a range of 0.3 to 0.65.

[4] A negative electrode for a lithium ion secondary battery, including: an artificial graphite material obtained by the production method according to any one of [1] to [3].

[5] A lithium ion secondary battery including: the negative electrode according to [4].

[6] An artificial graphite material for a lithium ion secondary battery negative electrode, in which a nitrogen adsorption specific surface area S (BET) thereof is in a range of 2.5 to 6.2 $m^2/g$,
the artificial graphite material has an absorption spectrum derived from a carbon radical appearing near g = 2.0 by an electron spin resonance method using an X band, and a ratio I (4.8 K)/S (BET) of a spin density I (4.8 K) (spins/g) calculated from a signal intensity at a temperature of 4.8 K to S (BET) is in a range of $5.2 \times 10^{17}$ to $6.8 \times 10^{17}$ spins/$m^2$.

[Advantageous Effects of Invention]

According to the present invention, it is possible to provide an artificial graphite material for a lithium ion secondary battery negative electrode, in which discharge capacity is unlikely to be degraded even in a case where the battery is repeatedly charged and discharged at a low temperature of -10°C, a production method therefor, a negative electrode for a lithium ion secondary battery, and a lithium ion secondary battery.

[Brief Description of Drawings]

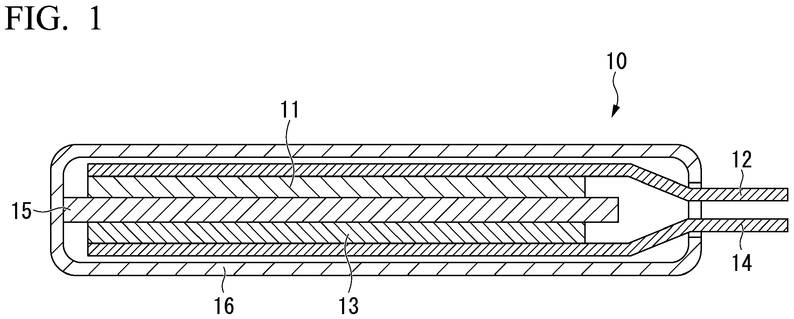

Fig. 1 is a schematic cross-sectional view showing an example of a lithium ion secondary battery according to the present embodiment.

[Description of Embodiments]

Hereinafter, an artificial graphite material for a lithium ion secondary battery negative electrode, a production method therefor, a negative electrode for a lithium ion secondary battery, and a lithium ion secondary battery of the present invention will be described in detail. Further, the present invention is not limited to embodiments described below.

«Artificial graphite material for lithium ion secondary battery negative electrode»

The artificial graphite material of the present embodiment satisfies all the following conditions (1) and (2). Further, it is preferable that the artificial graphite material of the present embodiment satisfies all the following conditions (1) to (3).

(1) The nitrogen adsorption specific surface area S (BET) is in a range of 2.5 to 6.2 $m^2/g$.
(2) The artificial graphite material has an absorption spectrum derived from a carbon radical appearing near g = 2.0 by an electron spin resonance method using an X band, and a ratio 1 (4.8 K)/S (BET) of a spin density I (4.8 K) (spins/g) calculated from a signal intensity at a temperature of 4.8 K to S (BET) is in a range of $5.2 \times 10^{17}$ to $6.8 \times 10^{17}$ spins/m$^2$.

(3) A size L (112) of a crystallite which is calculated from a (112) diffraction line as measured by an X-ray wide angle diffraction method is in a range of 4 to 30 nm.

The nitrogen adsorption specific surface area S (BET) under the above-described condition (1) is a nitrogen adsorption specific surface area (m$^2$/g) measured and calculated in conformity with "Determination of the Specific Surface Area of Powders (Solids) by Gas Adsorption-BET Method" of JIS Z 8830 (2013). Hereinafter, the specific surface area measured and calculated by this method may be simply referred to as "specific surface area".

In ESR measurement performed by adding a graphite material in a sample tube, vacuum-drawing the inside, and sealing He gas in the sample tube, I (4.8 K) under the above-described condition (2) is a spin density (spins/g) calculated from the signal intensity of the absorption spectrum derived from a carbon radical appearing near g = 2.0 in a case where the measurement is performed under conditions of using an X band (9.60 GHz) as a microwave, an intensity of 1 mw, a central magnetic field of 3412 G, a magnetic field modulation of 100 kHz, and a measurement temperature of 4.8 K. The ESR spectrum is typically obtained from a first derivative spectrum and becomes an absorption spectrum in a case of integration once, and the signal intensity is obtained in a case of integration twice. The magnitude of the spin density calculated from the signal intensity here is an index showing the density of unpaired electrons in a substance. Therefore, the ratio 1 (4.8 K)/S (BET) under the above-described condition (2) is an index showing the density of unpaired electrons per unit surface area and will be simply referred to as I (4.8 K)/S (BET) below.

The size L (112) of a crystallite which is calculated from the (112) diffraction line measured by the X-ray wide angle diffraction method under the above-described condition (3) is the size L (112) measured and calculated in conformity with the "method of measuring lattice constant and crystallite size of artificial graphite material" of JIS R 7651 (2007). Hereinafter, the size L (112) measured and calculated by this method may also be simply referred to as L (112).

As a result of intensive examination repeatedly conducted by the inventors by focusing on the size of a crystallite of the artificial graphite material, the nitrogen adsorption specific surface area, and 1 (4.8 K)/S (BET), it was found that degradation of the discharge capacity in a case where the battery is repeatedly charged and discharged at a temperature of -10°C or lower can be suppressed by preparing a lithium ion secondary battery having a negative electrode that contains an artificial graphite material satisfying all the above-described conditions (1) and (2) and preferably all the above-described conditions (1) to (3), thereby completing the present invention.

In the lithium ion secondary battery having a negative electrode which contains the artificial graphite material satisfying the above-described condition (1) that "nitrogen adsorption specific surface area is in a range of 2.5 to 6.2 m$^2$/g", the discharge capacity is unlikely to be degraded even in a case where charge and discharge cycles are repeated at a low temperature of -10°C or lower. In a case where the nitrogen adsorption specific surface area is 2.5 m$^2$/g or greater, the effect of suppressing deposition of lithium metal on the negative electrode due to the large nitrogen adsorption specific surface area can be sufficiently obtained. In addition, in the artificial graphite material having a nitrogen adsorption specific surface area of 6.2 m$^2$/g or less, the intercalation reaction of lithium ions with graphite crystals in a case where the battery is charged at a low temperature of - 10°C or lower is not inhibited by the steric hindrance due to disordered carbon on each particle surface generated by the crushing of the graphite powder during the production in the specific surface area.

Here, the disordered carbon is an aggregate structure formed of carbon atoms that are not incorporated into a carbon hexagonal network plane. The chemical structure thereof is not necessarily clear, but is thought to be a complex aggregate structure consisting of dangling bonds generated by chemical bonds constituting the hexagonal network plane being broken by the mechanical energy of crushing (see, for example, "Carbon Terminology Dictionary", pp. 354 and 355 (published by Agne Shofusha, October 5, 2000)). Therefore, disordered carbon functions as steric hindrance to the reversible intercalation reaction with graphite accompanied by charging and discharging of the battery, and lithium metal is likely to be deposited during charging. As described above, since disordered carbon is generated by crushing graphite powder during production, the contribution of disordered carbon as steric hindrance is small in a case where the graphite powder is crushed to a size of 6.2 m$^2$/g or less.

On the contrary, in artificial graphite obtained by crushing graphite powder to a size of greater than 6.2 m$^2$/g in terms of the nitrogen adsorption specific surface area during production, a large amount of disordered carbon is introduced onto the particle surface, and the contribution of steric hindrance to the reversible intercalation reaction of lithium ions increases. Particularly, in a case where the battery is charged at a low temperature of -10°C or lower, at which the viscosity of the electrolytic solution decreases, lithium ions are likely to be deposited, which is not preferable.

In the lithium ion secondary battery having a negative electrode that contains an artificial graphite material satisfying the above-described condition (2) that "artificial graphite material has an absorption spectrum derived from a carbon radical appearing near g = 2.0 by an electron spin resonance method using an X band, and a ratio I (4.8 K)/S (BET) of a spin density I (4.8 K) calculated from an absorption intensity at a temperature of 4.8 K to S (BET) is in a range of $5.2 \times 10^{17}$ to $6.8 \times 10^{17}$", the discharge capacity is unlikely to be degraded even in a case where charge and discharge cycles are repeated at a low temperature of -10°C or lower. Here, I (4.8 K) described above is an index showing the spin density (spins/g) of unpaired electrons (localized electrons) contained in disordered carbon introduced by crushing graphite powder during production. Further, I (4.8 K)/S (BET) denotes the amount of disordered carbon mainly introduced onto the particle surface per unit area (spins/m$^2$). The reason for this will be described in detail below.

ESR measurement is a spectroscopic analysis performed by observing the transition between levels that occurs in a case where unpaired electrons are placed in a magnetic field. In a case where a magnetic field is applied to a substance having unpaired electrons, the energy level of the substance is divided into two levels by the Zeeman effect. The measurement is performed by sweeping the magnetic field under a microwave irradiation condition, and ΔE which is an energy split interval increases as the applied magnetic field increases. Resonance absorption is observed in a case where ΔE is equal to the energy of the applied microwave, and the amount of the energy to be absorbed during this resonance absorption is detected to obtain the ESR spectrum. The ESR spectrum is typically obtained from a first derivative spectrum and becomes an absorption spectrum in a case of integration once, and the signal intensity is obtained in a case of integration twice. The magnitude of the signal intensity here is an index showing the magnitude of the density of unpaired electrons in the substance. Two kinds of unpaired electrons, which are localized electrons and conduction electrons, are present in the crystals of the graphite material. That is, in the ESR measurement of the graphite material, the sum of the resonance absorption of microwaves by these two kinds of unpaired electrons is observed as the ESR spectrum. The signal intensity obtained by integrating the obtained ESR spectrum twice is an index showing the magnitude of the density of the unpaired electrons, which is the sum of the density of conduction electrons and the density of localized electrons. Here, the conduction electrons in the graphite material are unpaired π electrons spontaneously expressed in relation to the number of rings forming the hexagonal network planes and the bonding form thereof and can freely move in the hexagonal network planes (see, for example, Carbon 1966, No. 47, pp. 30 to 34, 1967, No. 50, pp. 20 to 25).

Meanwhile, the localized electrons are localized electrons present on the edge surfaces of the hexagonal network plane laminate, which are immovable electrons. Further, while the signal intensity of resonance absorption by conduction electrons is not temperature-dependent, the signal intensity of resonance absorption by localized electrons increases in inverse proportion to a measurement temperature T. For example, it has been reported that in a case where the measurement is performed by gradually lowering the measurement temperature from 300 K in the ESR measurement of the carbon material in a temperature range of 4.2 K ≤ T ≤ 300 K, absorption of microwaves by localized electrons begins to be observed in the vicinity of 50 K, and the signal intensity due to localized electrons increases rapidly in inverse proportion to the measurement temperature T, in a low temperature region of 50 K or lower (see, for example, Carbon 1996, No. 175, pp. 249 to 256). As described above, the spin density I (4.8 K) to be calculated from the absorption intensity at a temperature of 4.8 K is an index showing the density of localized electrons. Further, since the localized electrons introduced by crushing the graphite powder during production are introduced onto the fracture surface, that is, the particle surface, the ratio I (4.8 K)/S (BET) of I (4.8 K) to the nitrogen adsorption specific surface area S (BET) can be regarded as an index showing the localized electron spin amount per unit area of the particle surface.

The artificial graphite material of the present embodiment satisfies the above-described condition (2). That is, the condition that the artificial graphite material has an absorption spectrum derived from a carbon radical appearing near g = 2.0 by an electron spin resonance method using an X band and the ratio 1 (4.8 K)/S (BET) of a spin density I (4.8 K) calculated from an absorption intensity at a temperature of 4.8 K to S (BET) is in a range of $5.2 \times 10^{17}$ to $6.8 \times 10^{17}$ is satisfied. Particularly, in a case where high crystalline graphite powder under the condition (3) that the size L (112) of a crystallite is in a range of 4 to 30 nm is crushed until the nitrogen adsorption specific surface area reaches a range of 2.5 to 6.2 m$^2$/g as the volume reference surface area of the condition (1), the regularity of the three-dimensional arrangement of carbon atoms on the fracture surface is greatly decreased, and the density of localized electrons per unit area, that is, I (4.8 K)/S (BET) is improved and typically reaches a range of $7.0 \times 10^{17}$ (spins/m$^2$) or greater.

Meanwhile, the artificial graphite of the present embodiment satisfies I (4.8 K)/S (BET) of $5.2 \times 10^{17}$ to $6.8 \times 10^{17}$. That is, the artificial graphite of the present embodiment can be said to be a graphite material having a low density (spins/m$^2$) of localized electrons to be introduced onto the particle surface by crushing the graphite powder during production, that is, having a small amount of disordered carbon to be introduced onto the particle surface. Since the amount of disordered carbon that functions as steric hindrance to the reversible intercalation of lithium ions is small, lithium metal is unlikely to be deposited even in a case where the battery is charged at a low temperature of -10°C or lower, and degradation of the discharge capacity in a case where the battery is repeatedly charged and discharged in the temperature range can be suppressed.

An artificial graphite material in which I (4.8 K)/S (BET) is less than $5.2 \times 10^{17}$ can be produced, but a significant decrease in the discharge capacity (degradation of the charge and discharge capacity) is observed in a case where the lithium ion secondary battery obtained by using such artificial graphite as a negative electrode is charged at a low temperature of -10°C or lower. The reason for this is not clear, but it is considered that in a case where the amount of localized electrons present on the particle surface is small, that is, the amount of disordered carbon present on the particle surface is extremely small, lithium ions are intercalated to graphite crystals so that the solvent of the electrolytic solution is co-inserted (cointercalated), reduced, and cracked between the crystal layers in a case where the battery is charged at a low temperature of -10°C or lower. For the above-described reason, I (4.8 K)/S (BET) is limited to a range of $5.2 \times 10^{17}$ to $6.8 \times 10^{17}$.

The artificial graphite material satisfying the condition (3) that "size L (112) is in a range of 4 to 30 nm" has crystals which are highly developed. The artificial graphite material having a size L (112) of 4 to 30 nm has a graphitization degree suitable for a negative electrode of a lithium ion secondary battery. Since the reversible capacity increases as the size L (112) increases, the size L (112) of the artificial graphite material is preferably 4 nm or greater. In the artificial graphite material having a size L (112) of less than 4 nm, the crystal structure is insufficiently developed. Therefore, a lithium ion secondary battery having a negative electrode that contains an artificial graphite material having a size L (112) of less than 4 nm has a small capacity, which is not preferable in some cases (see, for example, "Negative Electrode Carbon Material for Lithium Ion Secondary Battery" pp. 3 and 4, (published by Realize Corporation, October 20, 1996)).

<<Method for producing artificial graphite material for lithium ion secondary battery negative electrode>>

The artificial graphite material of the present embodiment can be produced by, for example, the production method described below.

That is, the method for producing an artificial graphite material for a lithium ion secondary battery negative electrode of the present embodiment, includes at least

a step of performing a coking treatment on a raw material oil composition by performing a delayed coking process to generate a raw coke composition (hereinafter, also referred to as "step A"),
a step of performing a heat treatment on the raw coke composition to obtain a heat-treated raw coke composition (hereinafter, also referred to as "step B"),
a step of crushing the heat-treated raw coke composition to obtain heat-treated raw coke powder (hereinafter, also referred to as "step C"),
a step of graphitizing the heat-treated raw coke powder to obtain graphite powder (hereinafter, also referred to as "step D"), and
a step of crushing the graphite powder (hereinafter, also referred to as "step E"). In the method for producing an artificial graphite material for a lithium ion secondary battery negative electrode according to the present embodiment, the volatile content of the heat-treated raw coke powder is less than 3.71 % and preferably 0.1 % or greater and 3.6% or less, and the true density of the heat-treated raw coke powder is greater than 1.22 g/cm$^3$ and less than 1.73 g/cm$^3$ and preferably 1.26 g/cm$^3$ or greater and 1.68 g/cm$^3$ or less.

The volatile content of the heat-treated raw coke powder is the volatile content [mass fraction (%)] to be calculated in conformity with "b) In case of cokes" of "7.2 Vertical tubular electric furnace method" of "7. Volatile content quantification method" described in "Coal and coke-methods for proximate analysis" of JIS M 8812 (2004). Hereinafter, the volatile content calculated by this method will be referred to as "volatile content".

The true density of the heat-treated raw coke powder is the true density [g/cm$^3$] to be calculated in conformity with "7.3 True density test method" of "7. Density/pore ratio test method" described in "Coke-test method" of JIS K 2151 (2004). Hereinafter, the true density calculated by this method will be referred to as "true density".

The reason why degradation of the discharge capacity is suppressed even when the battery is repeatedly charged and discharged at a low temperature of -10°C in a case where the artificial graphite material is used for a negative electrode of a lithium ion secondary battery is assumed to be that the fracture starting point occurring due to the combination of the heat treatment of the raw coke composition and the subsequent crushing remains after graphitization, crushing occurs at the fracture starting point as a starting point, and as a result, the amount of disordered carbon introduced onto the fracture surface is decreased.

Although the volatile content is decreased by the heat treatment of the raw coke composition, volatile content evaporation paths, that is, curved pores with various sizes are formed on the surface thereof and the internal bulk. Due to the mechanical energy generated by the crushing after the heat treatment, pores with small diameters grow as cavities (cracks), and pores with large diameters are broken (crushed) after the growth as cavities. The cavities grown as described above remain as lattice defects even after graphitization and serve as a fracture starting point in the subsequent crushing. Lattice defects (the cavities described above) remain on the fracture surface generated by such crushing, and chemical bond breakage occurs in fracture regions other than the lattice defects. Since the breakage of the chemical bond does not occur in the entire fracture surface, the amount of disordered carbon introduced by crushing is further decreased on the fracture surface of the crushing generated with the lattice defects as the fracture starting points, as compared with the fracture surface of crushing generated in a state where lattice defects are not present. Since the amount of disordered carbon that functions as steric hindrance to the reversible intercalation of lithium ions is small, lithium metal is unlikely to be deposited even in a case where the battery is charged at a low temperature of -10°C or lower, and degradation of the discharge capacity in a case where the battery is repeatedly charged and discharged in the temperature range can be suppressed.

The true density of the raw coke composition generated by the coking treatment through the delayed coking process performed on the raw material oil composition is typically in a range of 1.1 to 1.4 g/cm$^3$, and the volatile content is typically in a range of 5% to 15% (Non Patent Document 2). As a general change due to the heat treatment performed on the raw coke composition having such properties, the volatile content is decreased and the true density is improved. The reason why the volatile content decreases is that the volatile content contained in the raw coke composition is a reaction product of the raw material oil composition remaining in a state where the thermal cracking and the polycondensation reaction are insufficient in the delayed coking process, and thus the volatile content scatters due to the subsequent heat treatment. The reason why the true density is improved is that the thermal cracking and the polycondensation reaction further proceed due to the heat treatment. In a case where the volatile content of the heat-treated raw coke powder obtained by performing the heat treatment on the raw coke composition having the above-described characteristics and crushing the raw coke composition is reduced to less than 3.71% and preferably 0.1% or greater and 3.6% or less, and the true density of the heat-treated raw coke powder is improved to greater than 1.22 g/cm$^3$ and less than 1.73 g/cm$^3$ and preferably 1.26 g/cm$^3$ or greater and 1.68 g/cm$^3$ or less, since a large amount of the fracture starting points with an appropriate size are introduced, degradation of the discharge capacity can be suitably suppressed even in a case where the battery is repeatedly charged and discharged at -10°C in the artificial graphite material for a lithium ion secondary battery negative electrode to be subsequently obtained.

For example, the volatile content of the heat-treated raw coke powder is less than 0.1% in a case where the heat treatment reaction of the raw coke composition extremely proceeds, and the hexagonal network plane consisting of carbon atoms extremely grows in a case where the true density is greater than 1.68 g/cm$^3$, and thus the fracture starting points with an appropriate size cannot be introduced even in a case where crushing is subsequently carried out. Therefore, the discharge capacity is significantly degraded in a case where the battery is repeatedly charged and discharged at -10°C in the artificial graphite material to be subsequently obtained.

On the contrary, in a case where the heat treatment performed on the raw coke composition is insufficient, and the volatile content of the heat-treated raw coke powder is 3.7% or greater and the true density is 1.22 g/cm$^3$ or less, since only the compound having a relatively low molecular weight in which the thermal cracking reaction or the polycondensation reaction occurring due to the delayed coking process is insufficient evaporates, fracture starting points with an appropriate size cannot be formed. Therefore, the discharge capacity is significantly degraded in a case where the battery is repeatedly charged and discharged at -10°C in the artificial graphite material to be subsequently obtained. Therefore, the volatile content of the heat-treated heat-treated raw coke powder is limited to less than 3.71%, and the true density is limited to greater than 1.22 g/cm$^3$ and less than 1.73 g/cm$^3$.

Hereinafter, each step in the method for producing the artificial graphite material for a lithium ion secondary battery negative electrode according to the present embodiment will be described in detail.

[Step A]

Examples of the raw material oil composition in the step A include heavy oil such as bottom oil (FCC DO) of fluid catalytic cracking oil, heavy oil subjected to an advanced hydrodesulfurization treatment, vacuum distillation residual oil (VR), liquelied coal oil, solvent extracted coal oil, atmospheric distillation residual oil, shale oil, tar sands bitumen, naphtha tar pitch, coal tar pitch, or ethylene bottom oil. Further, as the raw material oil composition, any heavy oil described above may be subjected to various treatments such as hydrorefining and then used.

As the raw material oil composition in the step A, it is particularly preferable to use heavy oil which contains an appropriate saturated component and appropriate normal paraffin and is subjected to an advanced hydrodesulfurization treatment. As the raw material oil composition, a single heavy oil may be used, or two or more kinds of heavy oils may be mixed and used. In a case where two or more kinds of heavy oils are mixed and used as the raw material oil composition, the blending ratio between respective heavy oils can be appropriately adjusted according to the properties of various heavy oils. Further, the properties of various heavy oils vary depending on the kind of crude oil, the conditions of the treatment carried out until heavy oil is obtained from the crude oil, and the like.

As the raw material oil composition in the step A, it is preferable to use a raw material oil composition containing a component that generates a satisfactory bulk mesophase during the coking treatment and a component that generates gas reducing the size of the bulk mesophase in a case where the bulk mesophase is polycondensed, carbonized, and solidified.

Examples of the component that generates a satisfactory bulk mesophase in the raw material oil composition in the step A include a heavy oil component in which the aromatic index fa acquired by a Knight method is in a predetermined range. In the method for producing the artificial graphite material of the present embodiment, it is preferable to use a raw material oil composition in which the aromatic index fa acquired by the Knight method is in a range of 0.30 to 0.65, more preferable to use a raw material oil composition in which the aromatic index fa is in a range of 0.35 to 0.60, and still more preferable to use a raw material oil composition in which the aromatic index fa is in a range of 0.40 to 0.55.

Here, the aromatic index fa is an aromatic carbon fraction obtained by the Knight method. In the Knight method, the carbon distribution is divided into three components (A1, A2, and A3) as a spectrum of aromatic carbon by the $^{13}$C-NMR method. Here, A1 represents the number of carbon atoms inside the aromatic ring (half of the substituted aromatic carbon atoms and the non-substituted aromatic carbon atoms (corresponding to the peak in a range of approximately 40 to 60 ppm of $^{13}$C-NMR)), A2 represents the number of the other half of the non-substituted remaining aromatic carbon atoms (corresponding to the peak in a range of approximately 60 to 80 ppm of $^{13}$C-NMR), and A3 represents the number of aliphatic carbon atoms (corresponding to the peak in a range of approximately 130 to 190 ppm of $^{13}$C-NMR). The aromatic index fa is acquired by an expression of "fa = (A1 + A2)/(A1 + A2 + A3)" using A1, A2, and A3. The $^{13}$C-NMR method is the most approved method for quantitatively acquiring fa, which is the most basic quantity of chemical structural parameters of pitches (see, for example, Non Patent Document 3).

In a case where the aromatic index fa of the raw material oil composition in the step A is 0.3 or greater, the probability that the fracture starting points with an appropriate size are formed by the combination of the heat treatment performed on the raw coke composition and the subsequent crushing treatment, and splitting crushing occurs due to the crushing after the graphitization is increased. Further, it is preferable that the aromatic index fa is 0.65 or less from the viewpoint that the size of the bulk mesophase can be limited to a small size by the gas generated during the coking treatment. Since the boundary of the adjacent bulk mesophases is likely to form the fracture starting points by performing the subsequent crushing treatment, the probability that splitting crushing occurs by the crushing treatment after the graphitization is increased. On the contrary, in a case where the aromatic index fa is greater than 0.65, a large number of mesophases are rapidly generated in the matrix during the coking treatment, and the rate of coalescence between the mesophases is faster than the single growth rate of the mesophases. As a result, the effect of reducing the size of the bulk mesophase due to the gas generated during the coking treatment cannot be sufficiently obtained, and thus the size of the bulk mesophase may not be limited to a small size. Further, in a case where the aromatic index fa is less than 0.3, the fracture starting point generated by the crushing of the raw coke composition after the heat treatment is likely to greatly grow, and the probability of breakage (leading to crushing) increases rapidly. As a result, the number of fracture starting points remaining after the graphitization is reduced more than necessary, and splitting crushing is unlikely to occur in the crushing treatment after the graphitization, which is not preferable.

Examples of the component generating gas that reduces the size of the bulk mesophase in the raw material oil composition in the step A include normal paraffin. In the artificial graphite material production method of the present embodiment, a raw material oil composition having a normal paraffin content of 5% to 20% by mass is preferable, and a raw material oil composition having a normal paraffin content of 10% to 15% by mass is more preferable as the raw material oil composition.

The normal paraffin content of the raw material oil composition in the step A denotes a value measured by a gas chromatograph equipped with a capillary column. Specifically, the measurement is performed by passing a sample of a non-aromatic component separated by an elution chromatography method through the capillary column after verification with a standard substance of normal paraffin. Based on the measured value, the normal paraffin content with respect to the total mass of the raw material oil composition can be calculated.

The normal paraffin contained in the raw material oil composition in the step A generates gas during the coking treatment. The gas plays an important role of limiting the size of the bulk mesophase generated during the coking treatment to a small size and limiting the size of the mesophase to a small size. In addition, the gas generated during the coking treatment also has a function of uniaxially aligning adjacent mesophases limited to have a small size to form a fine structure having a selective aligning property.

In a case where the normal paraffin content of the raw material oil composition in the step A is 5% by mass or greater, the bulk mesophase is suppressed from growing more than necessary, and a carbon hexagonal network plane laminate having an appropriate size is likely to be formed. Further, in a case where the normal paraffin content of the raw material oil composition is 20% by mass or less, the amount of gas to be generated from the normal paraffin does not extremely increase. In a case where the gas is excessively generated during the coking treatment, the fracture starting points to be generated by the crushing of the raw coke composition after the heat treatment tend to grow large, and the probability of breakage (leading to crushing) increases rapidly. As a result, the number of fracture starting points remaining after the graphitization is reduced more than necessary, and splitting crushing is unlikely to occur, which is not preferable.

As described above, the normal paraffin content of the raw material oil composition in the step A is in a range of 5% to 20% by mass, and the aromatic index fa acquired by the Knight method is preferably in a range of 0.3 to 0.65. The boundaries of adjacent mesophases are appropriately introduced by performing the coking treatment on such a raw material oil composition by performing a delayed coking process, and the fracture starting points with an appropriate size that can remain even after the subsequent graphitization treatment are formed by the combination of the heat treatment of the raw coke composition and the subsequent crushing treatment. As a result, the probability that splitting crushing occurs due to crushing after the graphitization is increased.

A raw material oil composition in which the normal paraffin content and the aromatic index fa are respectively in the above-described ranges and which has a density D of 0.91 to 1.02 g/cm$^3$ is more preferable, and a raw material oil composition which further has a viscosity V of 10 to 220 mm$^2$/s is particularly preferable as the raw material oil composition in the step A.

As a method of performing the coking treatment on the raw material oil composition by performing a delayed coking process in the step A, for example, a known method described in Patent Document 1 can be used. The method of performing the coking treatment on the raw material oil composition by performing a delayed coking process is markedly suitable for mass production of raw materials for high-quality artificial graphite materials.

In the step A, a delayed coking process is used as the method of performing the coking treatment on the raw material oil composition. By performing the coking treatment, thermal cracking and the polycondensation reaction of the raw material oil composition occur, and a large liquid crystal that is referred to as a mesophase is generated as an intermediate product, thereby obtaining a raw coke composition.

As the conditions for the delayed coker, for example, the pressure is preferably in a range of 0.1 to 0.8 MPa and more preferably in a range of 0.2 to 0.6 MPa.

Further, the temperature is preferably in a range of 400°C to 600°C and more preferably in a range of 490°C to 540°C.

In the production method of the present embodiment, the size of the carbon hexagonal network plane constituting the mesophase is controlled by the gas generated from the raw material oil composition during the coking treatment. Therefore, the residence time of the gas generated from the raw material oil composition during the coking treatment in the system is an important control parameter for determining the size of the carbon hexagonal network plane. The residence time of the gas generated during the coking treatment in the system can be adjusted by the pressure during the coking treatment.

Therefore, in a case where the pressure in the coking treatment is in the above-described preferable ranges, the release rate of the gas to be generated from the raw material oil composition to the outside of the system is easily limited.

Further, in a case where the temperature in the coking treatment is in the above-described preferable ranges, a more satisfactory mesophase can be grown from the raw material oil composition adjusted to obtain the effects of the present invention.

On the contrary, in a case where the temperature in the coking treatment is extremely low and the pressure is extremely high, the amount of gas generated during the coking treatment is insufficient, and the crystal structure of the raw coke composition extremely grows. In this case, pores having openings are unlikely to be formed in the particle surface of the heat-treated raw coke composition prepared by the heat treatment in the step B described below and the unevenness is unlikely to be formed on the particle surface, which is not preferable.

Further, in a case where the temperature in the coking treatment is extremely high and the pressure is extremely low, the amount of gas generated during the coking treatment is excessive, the graphite crystal structure is difficult to grow even after the heat treatment in the subsequent graphitization step, and the high capacity is not expressed. Therefore, the artificial graphite material for a lithium ion secondary battery negative electrode is not preferable.

In the artificial graphite material production method of the present embodiment, the raw coke composition generated by the coking treatment is a composition containing raw coke.

[Step B]

In the step B, the raw coke composition generated by the coking treatment is subjected to the heat treatment to obtain a heat-treated raw coke composition.

Examples of a method of performing the heat treatment on the raw coke composition to obtain heat-treated raw coke powder include a method of performing a heat treatment in an inert gas atmosphere such as nitrogen, argon, or helium under conditions of a highest reach temperature of preferably 450°C to 750°C, more preferably 500°C to 700°C, and still more preferably 550°C to 650°C, a holding time for the highest reach temperature of preferably 0.1 to 3 hours, more preferably 0.2 to 2 hours, and still more preferably 0.5 to 1 hour. At this time, oxygen gas may be introduced into the atmosphere gas in a range of 0.01 to 21% by volume. Examples of the heating method include a method of charging a sheath with a raw coke composition and applying a roller hearth kiln and a method of directly charging a rotary kiln with a raw coke composition.

The volatile content and the true density of the heat-treated raw coke powder in the step B correlate with the heat treatment temperature and the heat treatment time of the raw coke composition. As a general tendency, the volatile content of the heat-treated raw coke composition and the heat-treated raw coke powder obtained from the composition decreases and the true density thereof increases as the heat treatment temperature increases or the heat treatment time increases. The heat treatment temperature and the heat treatment time of the raw coke composition are required to be set such that the volatile content of the heat-treated raw coke powder is less than 3.71% and the true density of the heat-treated raw coke powder is greater than 1.22 g/cm$^3$ and less than 1.73 g/cm$^3$.

From the viewpoint that the volatile content and the true density of the heat-treated raw coke powder are easily adjusted to be in the above-described ranges, the heat treatment time can be shortened, and the production cost can be reduced, the highest reach temperature of the heat treatment performed on the raw coke composition is preferably 450°C or higher, more preferably 500°C or higher, and still more preferably 550°C or higher. From the viewpoint that the volatile content and the true density of the heat-treated raw coke powder are easily adjusted to be in the above-described ranges and the quality stability of the heat-treated raw coke composition and the heat-treated raw coke powder can be improved, the highest reach temperature of the heat treatment performed on the raw coke composition is preferably 750°C or lower, more preferably 700°C or lower, and still more preferably 650°C or lower.

In a case where the heat treatment temperature is extremely low, it takes a long time to perform the step, and the production cost increases unnecessarily, which is not preferable. Further, in a case where the heat treatment temperature is extremely high, the variation in the properties (the volatile content and the true density) of the heat-treated raw coke composition and the heat-treated raw coke powder increases, which is not preferable from the viewpoint of the quality stability.

[Step C]

In the step C, the heat-treated raw coke composition generated by the heat treatment is crushed to obtain heat-treated raw coke powder. A known method such as a method of using a hammer type mill can be used as the method of obtaining the heat-treated raw coke powder without particular limitation.

The heat-treated raw coke powder may be classified so as to have a predetermined particle size. The average particle diameter of the heat-treated raw coke powder is preferably in a range of 5 to 40 $\mu$m. The average particle diameter of the heat-treated raw coke powder is obtained based on the measurement using a laser diffraction type particle size distribution meter. In a case where the average particle diameter of the heat-treated raw coke powder is 40 $\mu$m or less, the artificial graphite material obtained by graphitizing and crushing the heat-treated raw coke powder has a particle diameter suitable for a negative electrode of a lithium ion secondary battery. It is preferable that the average particle diameter of the heat-treated raw coke powder is 5 $\mu$m or greater from the viewpoint that the specific surface area of the artificial graphite material obtained by graphitizing and crushing the heat-treated raw coke powder does not extremely increase. In a case where a paste-like negative electrode mixture used for forming a negative electrode of a lithium ion secondary battery using a graphite material having an excessively large specific surface area is prepared, the amount of the solvent to be required is extremely large, which is not preferable.

[Step D]

In the step D, the heat-treated raw coke powder obtained by crushing the heat-treated raw coke composition is graphitized to obtain graphite powder. Specifically, the heat-treated raw coke powder is further subjected to the heat treatment to remove volatile components from the heat-treated raw coke powder, dehydrated, thermally cracked, and subjected to a solid phase graphitization reaction. An artificial graphite material with a stable quality can be obtained by performing the graphitization treatment.

As the graphitization treatment method, a heat treatment of performing calcination for removing volatile components from the heat-treated raw coke powder to obtain calcinated coke, performing a carbonization treatment for carbonizing the heat-treated raw coke powder, and performing a graphitization treatment is an exemplary example. The calcination and the carbonization treatment can be performed as necessary and may not be performed. Even in a case where the calcination and the carbonization treatment are not provided in the graphitization treatment method, there is almost no impact on the physical properties of the artificial graphite material to be finally produced.

As the calcination, a method of performing a heat treatment at a highest reach temperature of 500°C to 1500°C and preferably 900°C to 1200°C for a highest reach temperature holding time of 0 to 10 hours in an atmosphere of inert gas such as nitrogen, argon, or helium is an exemplary example.

As the carbonization treatment, a method of performing a heat treatment at a highest reach temperature of 500°C to 1500°C and preferably 900°C to 1500°C for a highest reach temperature holding time of 0 to 10 hours in an atmosphere of inert gas such as nitrogen, argon, or helium is an exemplary example.

As the graphitization treatment, a method of performing a heat treatment at a highest reach temperature of 2500°C to 3200°C and preferably 2800°C to 3200°C for a highest reach temperature holding time of 0 to 100 hours in an atmosphere of inert gas such as nitrogen, argon, or helium is an exemplary example. The graphitization treatment may be performed, for example, by enclosing the heat-treated raw coke powder in a crucible made of graphite using a graphitization furnace such as an Acheson furnace or an LWG furnace.

[Step E]

A known method such as a method of using an air flow jet mill can be used as the method of crushing the graphite powder obtained by graphitizing the heat-treated raw coke powder in the step E, without particular limitation.

Even in a case where the lithium ion secondary battery having a negative electrode that contains the artificial graphite material obtained by the method for producing the artificial graphite material for a lithium ion secondary battery negative electrode according to the present embodiment is repeatedly charged and discharged at a low temperature of -10°C, the discharge capacity is unlikely to be degraded.

<<Negative electrode for lithium ion secondary battery>>

Next, a negative electrode for the lithium ion secondary battery of the present embodiment will be described. The negative electrode for the lithium ion secondary battery of the present embodiment contains a carbon material containing the artificial graphite material obtained by the production method of the embodiment, a binder (binding agent), and a conductive assistant contained as necessary. The negative electrode for the lithium ion secondary battery of the present embodiment is not limited as long as the negative electrode contains the artificial graphite material obtained by the production method of the embodiment, and the negative electrode may contain, as the carbon material, one or two or more kinds of known graphite materials or amorphous carbon materials as necessary in addition to the artificial graphite material obtained by the production method of the embodiment.

Examples of known graphite materials include artificial graphite materials other than the artificial graphite material of the present embodiment and natural graphite-based materials. Further, examples of the amorphous carbon material include known easily graphitizable carbon materials and hardly graphitizable carbon materials.

Examples of the natural graphite-based materials include naturally produced graphite-like materials, materials obtained by highly purifying the graphite-like materials, highly purified and then spherically formed (including a mechanochemical treatment) materials, and materials obtained by coating surfaces of high-purity products and spherical products with other carbons (for example, pitch-coated products and CVD-coated products), and materials which have been subjected to a plasma treatment.

The shapes of the artificial graphite materials other than the artificial graphite material of the present embodiment, the natural graphite-based materials, and the amorphous carbon materials are not particularly limited, and may be, for example, scaly, spherical, or lumpy.

In a case where the negative electrode contains, as the carbon material, a graphite material other than the artificial graphite material obtained by the production method of the embodiment in addition to the artificial graphite material obtained by the production method of the embodiment, the mixing ratio thereof can be defined as an optional ratio. In the case where the negative electrode contains a graphite material other than the artificial graphite material obtained by the production method of the embodiment, the content of the artificial graphite material obtained by the production method of the embodiment is preferably 20% by mass or greater, more preferably 30% by mass or greater, and still more preferably 50% by mass or greater.

As the binder, a known agent used for a negative electrode for a lithium ion secondary battery can be used, and for example, carboxymethyl cellulose (CMC), polyvinylidene fluoride, polytetrafluoroethylene, and styrene-butadiene rubber (SBR) can be used alone or in the form of a mixture of two or more kinds thereof. The content of the binder in the negative electrode mixture is preferably approximately 1 to 30 parts by mass with respect to 100 parts by mass of the graphite material, and may be appropriately set as necessary in consideration of the design of the lithium ion secondary battery.

As the conductive assistant, a known agent used for a negative electrode for a lithium ion secondary battery can be used, and for example, conductive polymers such as carbon black, graphite, acetylene black, an indium-tin oxide exhibiting conductivity, polyaniline, polythiophene, and polyphenylene vinylene can be used alone or in the form of a mixture of two or more kinds thereof. The amount of the conductive assistant to be used is preferably in a range of 1 to 15 parts by mass with respect to 100 parts by mass of the graphite material, and may be appropriately set as necessary in consideration of the design of the lithium ion secondary battery.

The method for producing the negative electrode for a lithium ion secondary battery of the present embodiment is not particularly limited as long as a carbon material containing the artificial graphite material obtained by the production method of the embodiment is used, and a known production method can be used. In the method for producing the negative electrode for a lithium ion secondary battery of the present embodiment, a carbon material containing an artificial graphite material obtained by the production method of the embodiment is pressure-molded. For example, a negative electrode mixture which is a mixture containing the carbon material that contains the artificial graphite material obtained by the production method of the embodiment, a binder, a conductive assistant contained as necessary, and a solvent is produced. Thereafter, a method of pressure-molding the negative electrode mixture to predetermined dimensions is performed.

As the solvent used in the negative electrode mixture, a known solvent used for the negative electrode for a lithium ion secondary battery can be used. Specifically, for example, an organic solvent such as dimethylformamide, N-methylpyrrolidone, isopropanol, or toluene, and a solvent such as water can be used alone or in the form of a mixture of two or more kinds thereof.

In the production of the negative electrode mixture, as a method of mixing the graphite material, the binder, the conductive assistant contained as necessary, and the organic solvent, for example, a known device such as a screw type kneader, a ribbon mixer, a universal mixer, or a planetary mixer can be used. The pressure molding of the negative electrode mixture can be performed by using a method such as roll pressure or press pressure. It is preferable that the pressure molding of the negative electrode mixture is performed at a pressure of approximately 100 to 300 MPa.

The negative electrode for a lithium ion secondary battery of the present embodiment can be produced by, for example, a method described below. That is, the graphite material containing the artificial graphite material obtained by the production method of the embodiment, the binder, the conductive assistant contained as necessary, and the solvent are kneaded by a known method to produce a slurry-like or paste-like negative electrode mixture. Thereafter, a negative electrode current collector such as copper foil is coated with the slurry-like negative electrode mixture and dried to mold into a sheet-like or pellet-like shape. Thereafter, the layer formed of the dried negative electrode mixture is rolled and cut to have predetermined dimensions.

The method of coating the negative electrode current collector with the slurry-like negative electrode mixture is not particularly limited, and for example, a known method such as a metal mask printing method, an electrostatic coating method, a dip coating method, a spray coating method, a roll coating method, a doctor blade method, a gravure coating method, a screen printing method, or a die coater method can be used.

It is preferable that the negative electrode mixture applied onto the negative electrode current collector is rolled using, for example, a flat plate press, a calendering roll, or the like. The layer formed of the dried negative electrode mixture formed on the negative electrode current collector can be integrated with the negative electrode current collector according to a known method such as a method using a roll, a press, or a combination thereof.

The material of the negative electrode current collector can be used without particular limitation as long as the material does not form an alloy with lithium. Specific examples of the material of the negative electrode current collector include copper, nickel, titanium, and stainless steel. The shape of the negative electrode current collector can also be used without particular limitation. Specific examples of the shape of the negative electrode current collector include a foil shape, a perforated foil shape, a mesh shape, and a strip shape as the overall shape thereof.

Further, as the negative electrode current collector, for example, a porous material such as a porous metal (foam metal) or carbon paper may be used.

<<Lithium ion secondary battery>>

Next, the lithium ion secondary battery of the present embodiment will be described. Fig. 1 is a schematic cross-sectional view showing an example of the lithium ion secondary battery of the present embodiment. A lithium ion secondary battery 10 shown in Fig. 1 includes a negative electrode 11 integrated with a negative electrode current collector 12 and a positive electrode 13 integrated with a positive electrode current collector 14. In the lithium ion secondary battery 10 shown in Fig. 1, the negative electrode of the present embodiment is used as the negative electrode 11. The negative electrode 11 and a positive electrode 13 are disposed to face each other with a separator 15 interposed therebetween. In Fig. 1, the reference numeral 16 represents an aluminum laminate exterior. An electrolytic solution is injected into the aluminum laminate exterior 16.

The positive electrode 13 contains an active material, a binder, and a conductive assistant contained as necessary. As the active material, a known material used for a positive electrode for a lithium ion secondary battery can be used, and a metal compound, a metal oxide, a metal sulfide, or a conductive polymer material which is capable of doping or intercalating lithium ions can be used. Specific examples of the active material include lithium cobaltate ($LiCoO_2$), lithium nickelate ($LiNiO_2$), lithium manganate ($LiMn_2O_4$), a complex oxide ($LiCo_XNi_YMn_ZO_2$, $X + Y + Z = 1$), a lithium vanadium compound, $V_2O_5$, $V_6O_{13}$, $VO_2$, $MnO_2$, $TiO_2$, $MoV_2O_8$, $TiS_2$, $V_2S_5$, $VS_2$, $MoS_2$, $MoS_3$, $Cr_3O_8$, $Cr_2O_5$, olivine type $LiMPO_4$ (M:Co, Ni, Mn, Fe), a conductive polymer such as polyacetylene, polyaniline, polypyrrole, polythiophene, or polyacene, porous carbon, and mixtures thereof.

As the binder, the same binder as that used for the negative electrode 11 described above can be used. As the conductive assistant, the same conductive assistant as that used for the negative electrode 11 described above can be used.

As the positive electrode current collector 14, for example, a valve metal or an alloy thereof that forms a passive film on the surface by anodization in an electrolytic solution is preferably used. Specifically, Al, Ti, Zr, Hf, Nb, Ta, and alloys containing these metals can be used. Particularly, from the viewpoints of the light weight and the high energy density, Al and an alloy thereof are preferable.

As the separator 15, for example, non-woven fabric, a cloth, a microporous film, which contains polyolefin such as polyethylene or polypropylene as a main component, or a combination thereof can be used. Further, in a case where the lithium ion secondary battery has a structure in which the positive electrode and the negative electrode do not come into direct contact with each other, the separator is unnecessary.

As the electrolytic solution and an electrolyte used in the lithium ion secondary battery 10, a known organic electrolytic solution, an inorganic solid electrolyte, and a polymer solid electrolyte which are used in a lithium ion secondary battery can be used. As the electrolytic solution, it is preferable to use an organic electrolytic solution from the viewpoint of the electrical conductivity.

Examples of the organic electrolytic solution include an ether such as dibutyl ether, ethylene glycol monomethyl ether, ethylene glycol monoethyl ether, ethylene glycol monobutyl ether, diethylene glycol monomethyl ether, or ethylene glycol phenyl ether, an amide such as N-methylformamide, N,N-dimethylformamide, N-ethylformamide, N,N-diethylformamide, N-methylacetamide, N,N-dimethylacetamide, N-ethylacetamide, or N,N-diethylacetamide, a sulfur-containing compound such as dimethyl sulfoxide or sulfolane, dialkyl ketone such as methyl ethyl ketone or methyl isobutyl ketone, a cyclic ether such as tetrahydrofuran or 2-methoxy tetrahydrofuran, a cyclic carbonate such as ethylene carbonate, butylene carbonate, propylene carbonate, or vinylene carbonate, a chain-like carbonate such as diethyl carbonate, dimethyl carbonate, methyl ethyl carbonate, or methyl propyl carbonate, cyclic carbonic acid ester such as $\gamma$-butyrolactone or $\gamma$-valerolactone, chain-like carbonic acid ester such as methyl acetate, ethyl acetate, methyl propionate, or ethyl propionate, and an organic solvent such as N-methyl-2-pyrrolidinone, acetonitrile, or nitromethane. These organic electrolytic solutions can be used alone or in the form of a mixture of two or more kinds thereof.

As the electrolyte, various known lithium salts can be used. Examples of the lithium salts include $LiClO_4$, $LiBF_4$, $LiPF_6$, $LiAlCl_4$, $LiSbF_6$, LiSCN, LiCl, $LiCF_3SO_3$, $LiCF_3CO_2$, $LiN(CF_3SO_2)_2$, and $LiN(C_2F_5SO_2)_2$.

Examples of the polymer solid electrolyte include a polyethylene oxide derivative and a polymer containing the derivative, a polypropylene oxide derivative and a polymer containing the derivative, a phosphoric acid ester polymer, and a polycarbonate derivative and a polymer containing the derivative.

Since the lithium ion secondary battery 10 of the present embodiment includes the negative electrode 11 containing the artificial graphite material of the present embodiment, capacity degradation is unlikely to occur even in a case where the charge and discharge cycles are repeated at a low temperature of -10°C or lower. Therefore, the lithium ion secondary battery 10 of the present embodiment can be preferably used for industrial purposes such as applications for automobiles such as hybrid automobiles, plug-in hybrid automobiles, and electric automobiles and power storage of system infrastructures.

Further, the lithium ion secondary battery of the present invention is not limited as long as the negative electrode of the present invention is used for the battery, and is not restricted in selecting members necessary for the configuration of the battery other than the negative electrode.

Specifically, the structure of the lithium ion secondary battery of the present invention is not limited to the lithium ion secondary battery 10 shown in Fig. 1.

The method for producing the lithium ion secondary battery of the present embodiment is not particularly limited as long as the negative electrode obtained by the method for producing the negative electrode for the lithium ion secondary battery of the embodiment is used, and a known production method can be used. The method for producing the lithium ion secondary battery of the present embodiment includes a step of disposing the negative electrode obtained by the method for producing a negative electrode for a lithium ion secondary battery of the embodiment and a positive electrode to face each other via a separator. It is preferable that the method includes a step of integrating the negative electrode obtained by the method for producing a negative electrode for a lithium ion secondary battery of the embodiment and the negative electrode current collector, integrating the positive electrode and the positive electrode current collector, and disposing the negative electrode integrated with the negative electrode current collector and the positive electrode integrated with the positive electrode current collector to face each other via a separator. The lithium ion secondary battery of the present embodiment can be obtained by accommodating a single-layer electrode body in which the negative electrode integrated with the negative electrode current collector and the positive electrode integrated with the positive electrode current collector are disposed to face each other via a separator in an exterior body and injecting an electrolytic solution to the inside of the exterior body.

The lithium ion secondary battery may have, for example, a structure obtained by inserting a wound electrode group in which a positive electrode and a negative electrode, which are molded into a strip shape, are spirally wound through a separator, into a battery case and sealing the case. Further, the lithium ion secondary battery may be a structure obtained by enclosing a laminated electrode plate group in which a positive electrode and a negative electrode, which are molded into a flat plate shape, are sequentially laminated through a separator, in an exterior body.

The lithium ion secondary battery of the present invention can be used as, for example, a paper type battery, a button type battery, a coin type battery, a laminated battery, a cylindrical battery, or a square battery.

[Examples]

Hereinafter, the present invention will be described in more detail with reference to examples and comparative examples. Further, the present invention is not limited to the following examples.

<Production of artificial graphite material>

(Example 1)

<<Production of raw material oil composition>>

Further, the atmospheric distillation residual oil which had been subjected to vacuum distillation and further hydrodesulfurized (sulfur content of 380 mass ppm, density of 0.83 g/cm$^3$ at 15°C) was subjected to fluid catalytic cracking under the conditions of a reaction temperature of 530°C, a total pressure of 0.23 MPa, and a catalyst/oil ratio of 13, and a contact time of 7 seconds, thereby obtaining a fluid catalytic cracking residual oil. As the catalyst, a silica-alumina catalyst which was allowed to carry platinum was used. Further, the "sulfur content" indicates a value measured in conformity with JIS K2541.
Further, the same volume of n-heptane was added to and mixed with the fluid catalytic cracking residual oil obtained above, and selective extraction was carried out with dimethylformamide so that the aromatic content and the saturated content were separated from the oil.
Further, the atmospheric distillation residual oil (sulfur content of 0.35% by mass, density of 0.92 g/cm$^3$ at 15°C) was subjected to vacuum distillation under the conditions of a heating furnace outlet temperature of 350°C and a pressure of 1.3 kPa, thereby obtaining vacuum distillation residual oil having an initial boiling point of 410°C, an asphalt content of 9% by mass, a saturated content of 61% by mass, a sulfur content of 0.1% by mass, and a nitrogen content of 0.3% by mass. The same volume of n-heptane as described above was added to and mixed with the vacuum distillation residual oil, and selective extraction was carried out with dimethylformamide so that the aromatic content and the saturated content were separated from the oil. Further, "sulfur content" denotes a value measured in conformity with JIS K 2609. Further, the "saturated content" and the "asphalt content" indicate values measured using a thin layer chromatograph.
The fluid catalytic cracking residual oil, the saturated content of the fluid catalytic cracking residual oil, and the saturated content of the vacuum distillation residual oil which were obtained in the above-described manners were mixed at a mass ratio of 43:50:7, thereby obtaining a raw material oil composition of Example 1. The normal paraffin content and the aromatic index fa of the obtained raw material oil composition of Example 1 were acquired by the methods described below. The results thereof are listed in Table 1. Further, the normal paraffin contents and the aromatic indices fa of raw material oil compositions obtained in Examples 2 to 5 and Comparative Examples 4 to 8 described below were also acquired by the same method as described above. The results are listed in Table 1.

(Normal paraffin content)

The normal paraffin content in the raw material oil composition was measured by a gas chromatograph equipped with a capillary column. Specifically, the measurement was performed by passing a sample of a non-aromatic component separated by an elution chromatography method through the capillary column after verification with a standard substance of normal paraffin. Based on the measured value, the normal paraffin content (% by mass) with respect to the total mass of the raw material oil composition was calculated.

(Aromatic index fa)

The aromatic index fa of the raw material oil composition was acquired by the Knight method. Specifically, the carbon distribution was divided into three components (A1, A2, and A3) as a spectrum of aromatic carbon by the $^{13}$C-NMR method. Here, A1 represents the number of carbon atoms inside the aromatic ring (half of the substituted aromatic carbon atoms and the non-substituted aromatic carbon atoms (corresponding to the peak in a range of approximately 40 to 60 ppm of $^{13}$C-NMR)), A2 represents the number of the other half of the non-substituted remaining aromatic carbon atoms (corresponding to the peak in a range of approximately 60 to 80 ppm of $^{13}$C-NMR), and A3 represents the number of aliphatic carbon atoms (corresponding to the peak in a range of approximately 130 to 190 ppm of $^{13}$C-NMR). The aromatic index fa was acquired by an expression of "fa = (A1 + A2)/(A1 + A2 + A3)" using A1, A2, and A3.

<<Step A>>

Next, the raw material oil composition of Example 1 was put into a test tube and was subjected to a heat treatment at 500°C for 3 hours under normal pressure as a coking treatment for coking, thereby obtaining a raw coke composition of Example 1.

<<Step B>>

The obtained raw coke composition of Example 1 was heated at 550°C in a nitrogen gas stream to obtain a heat-treated raw coke composition of Example 1.
A treatment of setting the heating time from room temperature to 550°C to 1 hour, the holding time of holding the temperature at 550°C to 1 hour, and the cooling time from 550°C to 400°C to 1 hour and allowing the composition to be naturally cooled for 4 hours while maintaining the nitrogen gas stream after the temperature reached 400°C was performed as the heat treatment method.

<<Step C>>

The obtained heat-treated raw coke composition of Example 1 was crushed with a hammer type mill such that the average particle diameter measured by a laser diffraction type particle size distribution measuring device was set to be in a range of 19.5 to 20.5 $\mu$m, thereby obtaining heat-treated raw coke powder of Example 1. The volatile content and the true density of the obtained heat-treated raw coke powder were acquired by the methods described below. The results are listed in Table 1. Further, the volatile contents and the true densities of the heat-treated raw coke powders obtained in Examples 2 to 5 and 9 to 13 and Comparative Examples 1 to 16 described below were also acquired by the same methods as described below. The results are listed in Tables 1 and 2.

(Measurement of volatile content)

The volatile content [mass fraction (%)] of the heat-treated raw coke powder was acquired in conformity with "b) In case of cokes" of "7.2 Vertical tubular electric furnace method" of "7. Volatile content quantification method" described in "Coal and coke-methods for proximate analysis" of JIS M 8812 (2004).

(Measurement of true density)

The true density [g/cm$^3$] of the heat-treated raw coke powder was acquired in conformity with "7.3 True density test method" of "7. Density/pore ratio test method" described in "Coke-test method" of JIS K 2151 (2004).

<<Step D>>

The heat-treated raw coke powder of Example 1 was put into a crucible consisting of graphite, the crucible was embedded in a packing coke serving as a heating material and a heat insulating material in an Acheson furnace, and the powder was graphitized at 2950°C. A treatment of setting the heating time from room temperature to 2950°C to 130 hours and the holding time of holding the temperature at 2950°C to 8 hours, allowing the powder to be naturally cooled for 25 days, and taking out the resultant was performed as the graphitization treatment, thereby obtaining graphite powder.

<<Step E>>

The obtained graphite powder was crushed with an air flow jet mill such that the average particle diameter thereof measured by a laser diffraction type particle size distribution measuring device was set to be in a range of 9.5 to 10.5 $\mu$m, thereby obtaining an artificial graphite material for a lithium ion secondary battery negative electrode of Example 1.

(Calculation of size L (112) of crystallite)

The artificial graphite material for a lithium ion secondary battery negative electrode of Example 1 was mixed with 10% by mass of a Si standard sample as an internal standard, a glass sample holder (window frame size of 16 mm × 20 mm, depth of 0.2 mm) was packed with the mixture, and the measurement was performed by a wide angle X-ray diffraction method in conformity with JIS R 7651 (2007), and the size L (112) of the crystallite was calculated. ULTIMA IV (manufactured by Rigaku Corporation) was used as the X-ray diffractometer, and CuK$\alpha$ rays (using K$\beta$ filter Ni) were

used as the X-ray source. Further, the voltage applied to the X-ray tube and the current thereof were set to 40 kV and 40 mA.

The obtained diffraction pattern was analyzed by a method in conformity with JIS R 7651 (2007). Specifically, the measurement data was subjected to a smoothing treatment, and then to absorption correction, polarization correction, and Lorentz correction after background removal. Thereafter, the (112) diffraction line of the artificial graphite material for a lithium ion secondary battery negative electrode was corrected using the peak position and the half width of a (422) diffraction line of the Si standard sample, and the size L (112) of the crystallite was calculated. Further, the size of the crystallite was calculated based on the half width of the corrected peak using the following Scherrer equation. The measurement and the analysis were carried out three times each, and the average value was defined as the size L (112).

$$L = K \times \lambda/(\beta \times \cos\theta B) \text{ ------- Scherrer equation}$$

Here,

L represents the crystal size (nm).
K represents the shape factor constant (= 1.0).
$\lambda$ represents the wavelength of X-rays (= 0.15406 nm).
$\theta$ represents the Bragg angle (corrected diffraction angle).
$\beta$ represents the true half width (correction value).

(Measurement of nitrogen adsorption specific surface area S (BET))

The nitrogen adsorption specific surface area of the artificial graphite material for a lithium ion secondary battery negative electrode of Example 1 was measured and calculated in conformity with "Determination of the Specific Surface Area of Powders (Solids) by Gas Adsorption-BET Method" of JIS Z 8830 (2013) using a specific surface area measuring device (BELSORP miniII) (manufactured by Microtrac Bell Co., Ltd.). Further, the artificial graphite material was pre-dried at 300°C for 3 hours under reduced pressure. Thereafter, the specific surface area ($m^2/g$) was calculated by the nitrogen adsorption BET multipoint method according to the gas flow method.

(Measurement of ESR signal intensity 1 (4.8 K) and calculation of 1 (4.8 K)/S (BET))

ESR measurement was performed by putting approximately 1.5 mg of the artificial graphite material for a lithium ion secondary battery negative electrode of Example 1 into a sample tube, vacuum-drawing the sample tube with a rotary pump, and enclosing the sample tube with He gas. As an ESR device, a microwave frequency counter, a Gauss meter, and a cryostat, ESP350E (manufactured by Bruker Corporation), HP5351P (manufactured by Hewlett-Packard Company), ER035M (manufactured by Bruker Corporation), and ESR910 (manufactured by Oxford Instruments) were used. The measurement was performed using an X band (9.60 GHz) as the microwave under conditions of an intensity of 1 mW, a central magnetic field of 3412 G, and a magnetic field modulation of 100 kHz. The absorption intensity I (4.8 K) was calculated at a measurement temperature of 4.8 K, and the result is listed in Table 1. The signal intensity is a value (spins/g) obtained by integrating the ESR spectrum twice and correcting the spectrum with a standard substance. The peak derived from a carbon radical that appeared by the electron spin resonance method measured using microwaves in an X band region was confirmed to appear near g = 2.0 in all negative electrode materials of the examples and the comparative examples. The value ($spins/m^2$) of the ratio 1 (4.8 K)/S (BET) of the obtained signal intensity 1 (4.8 K) and the nitrogen adsorption specific surface area S (BET) was calculated.

The size L (112) of the crystallite, the nitrogen adsorption specific surface area S (BET), the ESR signal intensity 1 (4.8 K) at a temperature of 4.8 K, and ratio 1 (4.8 K)/S (BET) of the obtained artificial graphite material for a lithium ion secondary battery negative electrode are listed in Table 1. Further, the size L (112) of the crystallite, the nitrogen adsorption specific surface area S (BET), the ESR signal intensity 1 (4.8 K) at a temperature of 4.8 K, and ratio I (4.8 K)/S (BET) of each artificial graphite material for a lithium ion secondary battery negative electrode of Examples 2 to 5 and Comparative Examples 1 to 8 were acquired by the same methods as described above. The results are listed in Table 1.

(Example 2)

<<Production of raw material oil composition>>

Atmospheric distillation residual oil having a sulfur content of 3.1% by mass was hydrodesulfurized in the presence of a catalyst such that the hydrocracking rate reached 25% or less, thereby obtaining hydrodesulfurized oil.

The hydrodesulfurization was performed under the condition of a total pressure of 18 MPa, a hydrogen partial pressure of 16 MPa, and a temperature of 380°C.

The hydrodesulfurized oil obtained above and the fluid catalytic cracking residual oil obtained in Example 1 were mixed at a mass ratio of 5:95, thereby obtaining a raw material oil composition of Example 2.

<<Step A>>

The raw material oil composition of Example 2 was subjected to a coking treatment for coking by the same method as in Example 1, thereby obtaining a raw coke composition.

<<Step B>>

The obtained raw coke composition was heated at 700°C in a nitrogen gas stream, thereby obtaining a heat-treated raw coke composition.

A treatment of setting the heating time from room temperature to 700°C to 2 hours, the holding time of holding the temperature at 700°C to 1 hour, and the cooling time from 700°C to 400°C to 2 hours and allowing the composition to be naturally cooled for 4 hours while maintaining the nitrogen gas stream after the temperature reached 400°C was performed as the heat treatment method.

<<Step C>>

The obtained heat-treated raw coke composition was crushed with a hammer type mill such that the average particle diameter measured by a laser diffraction type particle size distribution measuring device was set to be in a range of 19.5 to 20.5 $\mu$m, thereby obtaining heat-treated raw coke powder of Example 2.

<<Step D>>

The heat-treated raw coke powder of Example 2 was graphitized by the same method as in Example 1 to obtain graphite powder.

<<Step E>>

The obtained graphite powder was crushed with an air flow jet mill such that the average particle diameter thereof measured by a laser diffraction type particle size distribution measuring device was set to be in a range of 9.5 to 10.5 $\mu$m, thereby obtaining an artificial graphite material for a lithium ion secondary battery negative electrode of Example 2.

(Example 3)

<<Production of raw material oil composition>>

The saturated content of the fluid catalytic cracking residual oil and the aromatic content of the fluid catalytic cracking residual oil obtained in Example 1 were mixed at a mass ratio of 70:30, thereby obtaining a raw material oil composition of Example 3.

<<Step A>>

The raw material oil composition of Example 3 was subjected to a coking treatment for coking by the same method as in Example 1, thereby obtaining a raw coke composition.

<<Step B>>

The obtained raw coke composition was heated at 600°C in a nitrogen gas stream, thereby obtaining a heat-treated raw coke composition. A treatment of setting the heating time from room temperature to 600°C to 1 hour and 30 minutes, the holding time of holding the temperature at 600°C to 1 hour, and the cooling time from 600°C to 400°C to 1 hour and 30 minutes and allowing the composition to be naturally cooled for 4 hours while maintaining the nitrogen gas stream after the temperature reached 400°C was performed as the heat treatment method.

<<Step C>>

The obtained heat-treated raw coke composition was crushed with a hammer type mill such that the average particle diameter measured by a laser diffraction type particle size distribution measuring device was set to be in a range of 19.5 to 20.5 μm, thereby obtaining heat-treated raw coke powder of Example 3.

<<Step D>>

The heat-treated raw coke powder of Example 3 was graphitized by the same method as in Example 1 to obtain graphite powder.

<<Step E>>

The obtained graphite powder was crushed with an air flow jet mill such that the average particle diameter thereof measured by a laser diffraction type particle size distribution measuring device was set to be in a range of 9.5 to 10.5 μm, thereby obtaining an artificial graphite material for a lithium ion secondary battery negative electrode of Example 3.

(Example 4)

<<Production of raw material oil composition>>

The saturated content of the vacuum distillation residual oil obtained in Example 1 and the aromatic content of the fluid catalytic cracking residual oil similarly obtained in Example 1 were mixed at a mass ratio of 30:70, thereby obtaining a raw material oil composition of Example 4.

<<Step A>>

The raw material oil composition of Example 4 was subjected to a coking treatment for coking by the same method as in Example 1, thereby obtaining a raw coke composition.

<<Step B>>

The obtained raw coke composition was heated at 500°C in a nitrogen gas stream, thereby obtaining a heat-treated raw coke composition.
A treatment of setting the heating time from room temperature to 500°C to 1 hour, the holding time of holding the temperature at 500°C to 1 hour, and the cooling time from 500°C to 400°C to 1 hour and allowing the composition to be naturally cooled for 4 hours while maintaining the nitrogen gas stream after the temperature reached 400°C was performed as the heat treatment method.

<<Step C>>

The obtained heat-treated raw coke composition was crushed with a hammer type mill such that the average particle diameter measured by a laser diffraction type particle size distribution measuring device was set to be in a range of 19.5 to 20.5 μm, thereby obtaining heat-treated raw coke powder of Example 4.

<<Step D>>

The heat-treated raw coke powder of Example 4 was graphitized by the same method as in Example 1 to obtain graphite powder.

<<Step E>>

The obtained graphite powder was crushed with an air flow jet mill such that the average particle diameter thereof measured by a laser diffraction type particle size distribution measuring device was set to be in a range of 9.5 to 10.5 μm, thereby obtaining an artificial graphite material for a lithium ion secondary battery negative electrode of Example 4.

(Example 5)

<<Production of raw material oil composition>>

The saturated content of the fluid catalytic cracking residual oil obtained in Example 1, the aromatic content of the fluid catalytic cracking residual oil similarly obtained in Example 1, and the hydrodesulfurized oil obtained in Example 2 were mixed at a mass ratio of 20:20:60, thereby obtaining a raw material oil composition of Example 5.

<<Step A>>

The raw material oil composition of Example 5 was subjected to a coking treatment for coking by the same method as in Example 1, thereby obtaining a raw coke composition.

<<Step B>>

The obtained raw coke composition was heated at 500°C in a nitrogen gas stream, thereby obtaining a heat-treated raw coke composition.
A treatment of setting the heating time from room temperature to 500°C to 1 hour, the holding time of holding the temperature at 500°C to 1 hour, and the cooling time from 500°C to 400°C to 1 hour and allowing the composition to be naturally cooled for 4 hours while maintaining the nitrogen gas stream after the temperature reached 400°C was performed as the heat treatment method.

<<Step C>>

The obtained heat-treated raw coke composition was crushed with a hammer type mill such that the average particle diameter measured by a laser diffraction type particle size distribution measuring device was set to be in a range of 19.5 to 20.5 $\mu$m, thereby obtaining heat-treated raw coke powder of Example 5.

<<Step D>>

The heat-treated raw coke powder of Example 5 was graphitized by the same method as in Example 1 to obtain graphite powder.

<<Step E>>

The obtained graphite powder was crushed with an air flow jet mill such that the average particle diameter thereof measured by a laser diffraction type particle size distribution measuring device was set to be in a range of 9.5 to 10.5 $\mu$m, thereby obtaining an artificial graphite material for a lithium ion secondary battery negative electrode of Example 5.

(Comparative Example 1)

«Step A»

A raw coke composition was obtained in the same manner as in Example 1.

<<Low-temperature heat treatment step>>

The raw coke composition of Example 1 was heated at 400°C in a nitrogen gas stream to obtain a heat-treated raw coke composition of Comparative Example 1.
A treatment of setting the heating time from room temperature to 400°C to 1 hour and the holding time of holding the temperature at 400°C to 1 hour, and allowing the composition to be naturally cooled for 4 hours while maintaining the nitrogen gas stream was performed as the heat treatment method.

«Step C»

The obtained heat-treated raw coke composition of Comparative Example 1 was crushed with a hammer type mill such that the average particle diameter measured by a laser diffraction type particle size distribution measuring device was set to be in a range of 19.5 to 20.5 $\mu$m, thereby obtaining heat-treated raw coke powder.

«Step D»

The heat-treated raw coke powder of Comparative Example 1 was graphitized by the same method as in Example 1 to obtain graphite powder.

«Step E»

The obtained graphite powder was crushed with an air flow jet mill such that the average particle diameter thereof measured by a laser diffraction type particle size distribution measuring device was set to be in a range of 9.5 to 10.5 $\mu$m, thereby obtaining an artificial graphite material for a lithium ion secondary battery negative electrode of Comparative Example 1.

(Comparative Example 2)

«Step A»

A raw coke composition was obtained in the same manner as in Example 1.

<<High-temperature heat treatment step>>

The raw coke composition of Example 1 was heated at 750°C in a nitrogen gas stream to obtain a heat-treated raw coke composition of Comparative Example 2.

A treatment of setting the heating time from room temperature to 750°C to 2 hours, the holding time of holding the temperature at 750°C to 1 hour, and the cooling time from 750°C to 400°C to 2 hours and allowing the composition to be naturally cooled for 4 hours while maintaining the nitrogen gas stream after the temperature reached 400°C was performed as the heat treatment method. Thereafter, a treatment of allowing the composition to be naturally cooled for 4 hours while maintaining the nitrogen gas stream was performed.

«Step C»

The obtained heat-treated raw coke composition of Comparative Example 2 was crushed with a hammer type mill such that the average particle diameter measured by a laser diffraction type particle size distribution measuring device was set to be in a range of 19.5 to 20.5 $\mu$m, thereby obtaining heat-treated raw coke powder of Comparative Example 2.

«Step D»

The heat-treated raw coke powder of Comparative Example 2 was graphitized by the same method as in Example 1 to obtain graphite powder.

«Step E»

The obtained graphite powder was crushed with an air flow jet mill such that the average particle diameter thereof measured by a laser diffraction type particle size distribution measuring device was set to be in a range of 9.5 to 10.5 $\mu$m, thereby obtaining an artificial graphite material for a lithium ion secondary battery negative electrode of Comparative Example 2.

(Comparative Example 3)

«Step A»

A raw coke composition was obtained in the same manner as in Example 1.

«Heat treatment step»

In the method for producing the artificial graphite material for a lithium ion secondary battery negative electrode of Comparative Example 3, the raw coke composition was not subjected to the heat treatment.

«Step C»

The raw coke composition of Example 1 was crushed with a hammer type mill such that the average particle diameter measured by a laser diffraction type particle size distribution measuring device was set to be in a range of 19.5 to 20.5 μm, thereby obtaining heat-treated raw coke powder.

«Step D»

The heat-treated raw coke powder obtained above was graphitized by the same method as in Example 1 to obtain graphite powder.

«Step E»

The obtained graphite powder was crushed with an air flow jet mill such that the average particle diameter thereof measured by a laser diffraction type particle size distribution measuring device was set to be in a range of 9.5 to 10.5 μm, thereby obtaining an artificial graphite material for a lithium ion secondary battery negative electrode of Comparative Example 3.

(Comparative Example 4)

<<Production of raw material oil composition>>

The aromatic content of the fluid catalytic cracking residual oil obtained in Example 1, the saturated content of the fluid catalytic cracking residual oil similarly obtained in Example 1, and the hydrodesulfurized oil obtained in Example 2 were mixed at a mass ratio of 15:20:65, thereby obtaining a raw material oil composition of Comparative Example 4.

«Step A»

The raw material oil composition of Comparative Example 4 was subjected to a coking treatment for coking by the same method as in Example 1, thereby obtaining a raw coke composition.

«Step B»

The obtained raw coke composition was heated at 500°C in a nitrogen gas stream, thereby obtaining a heat-treated raw coke composition.
A treatment of setting the heating time from room temperature to 500°C to 1 hour, the holding time of holding the temperature at 500°C to 1 hour, and the cooling time from 500°C to 400°C to 1 hour and allowing the composition to be naturally cooled for 4 hours while maintaining the nitrogen gas stream after the temperature reached 400°C was performed as the heat treatment method.

«Step C»

The obtained heat-treated raw coke composition was crushed with a hammer type mill such that the average particle diameter measured by a laser diffraction type particle size distribution measuring device was set to be in a range of 19.5 to 20.5 μm, thereby obtaining heat-treated raw coke powder of Comparative Example 4.

«Step D»

The heat-treated raw coke powder of Comparative Example 4 was graphitized by the same method as in Example 1 to obtain graphite powder.

«Step E»

The obtained graphite powder was crushed with an air flow jet mill such that the average particle diameter thereof measured by a laser diffraction type particle size distribution measuring device was set to be in a range of 9.5 to 10.5 μm, thereby obtaining an artificial graphite material for a lithium ion secondary battery negative electrode of Comparative Example 4.

(Comparative Example 5)

<<Production of raw material oil composition>>

The aromatic content of the fluid catalytic cracking residual oil obtained in Example 1 and the saturated content of the fluid catalytic cracking residual oil similarly obtained in Example 1 were mixed at a mass ratio of 50:50, thereby obtaining a raw material oil composition of Comparative Example 5.

«Step A»

The raw material oil composition of Comparative Example 5 was subjected to a coking treatment for coking by the same method as in Example 1, thereby obtaining a raw coke composition.

«Step B»

The obtained raw coke composition was heated at 700°C in a nitrogen gas stream, thereby obtaining a heat-treated raw coke composition.
A treatment of setting the heating time from room temperature to 700°C to 2 hours, the holding time of holding the temperature at 700°C to 1 hour, and the cooling time from 700°C to 400°C to 2 hours and allowing the composition to be naturally cooled for 4 hours while maintaining the nitrogen gas stream after the temperature reached 400°C was performed as the heat treatment method.

«Step C»

The obtained heat-treated raw coke composition was crushed with a hammer type mill such that the average particle diameter measured by a laser diffraction type particle size distribution measuring device was set to be in a range of 19.5 to 20.5 μm, thereby obtaining heat-treated raw coke powder of Comparative Example 5.

«Step D»

The heat-treated raw coke powder of Comparative Example 5 was graphitized by the same method as in Example 1 to obtain graphite powder.

«Step E»

The obtained graphite powder was crushed with an air flow jet mill such that the average particle diameter thereof measured by a laser diffraction type particle size distribution measuring device was set to be in a range of 9.5 to 10.5 μm, thereby obtaining an artificial graphite material for a lithium ion secondary battery negative electrode of Comparative Example 5.

(Comparative Example 6)

<<Production of raw material oil composition>>

The saturated content of the vacuum distillation residual oil obtained in Example 1 and the aromatic content of the fluid catalytic cracking residual oil similarly obtained in Example 1 were mixed at a mass ratio of 15:85, thereby obtaining a raw material oil composition of Comparative Example 6.

«Step A»

The raw material oil composition of Comparative Example 6 was subjected to a coking treatment for coking by the same method as in Example 1, thereby obtaining a raw coke composition.

«Step B»

The obtained raw coke composition was heated at 600°C in a nitrogen gas stream, thereby obtaining a heat-treated raw coke composition.

A treatment of setting the heating time from room temperature to 600°C to 1 hour and 30 minutes, the holding time of holding the temperature at 600°C to 1 hour, and the cooling time from 600°C to 400°C to 1 hour and 30 minutes and allowing the composition to be naturally cooled for 4 hours while maintaining the nitrogen gas stream after the temperature reached 400°C was performed as the heat treatment method.

«Step C»

The obtained heat-treated raw coke composition was crushed with a hammer type mill such that the average particle diameter measured by a laser diffraction type particle size distribution measuring device was set to be in a range of 19.5 to 20.5 μm, thereby obtaining heat-treated raw coke powder of Comparative Example 6.

«Step D»

The heat-treated raw coke powder of Comparative Example 6 was graphitized by the same method as in Example 1 to obtain graphite powder.

«Step E»

The obtained graphite powder was crushed with an air flow jet mill such that the average particle diameter thereof measured by a laser diffraction type particle size distribution measuring device was set to be in a range of 9.5 to 10.5 μm, thereby obtaining an artificial graphite material for a lithium ion secondary battery negative electrode of Comparative Example 6.

(Comparative Example 7)

<<Production of raw material oil composition>>

The saturated content of the vacuum distillation residual oil obtained in Example 1, the aromatic content of the fluid catalytic cracking residual oil similarly obtained in Example 1, and the hydrodesulfurized oil obtained in Example 2 were mixed at a mass ratio of 4:91:5, thereby obtaining a raw material oil composition of Comparative

Example 7.

«Step A»

The raw material oil composition of Comparative Example 7 was subjected to a coking treatment for coking by the same method as in Example 1, thereby obtaining a raw coke composition.

«Step B»

The obtained raw coke composition was heated at 650°C in a nitrogen gas stream, thereby obtaining a heat-treated raw coke composition.

A treatment of setting the heating time from room temperature to 650°C to 1 hour and 30 minutes, the holding time of holding the temperature at 650°C to 1 hour, and the cooling time from 650°C to 400°C to 1 hour and 30 minutes and allowing the composition to be naturally cooled for 4 hours while maintaining the nitrogen gas stream after the temperature reached 400°C was performed as the heat treatment method.

«Step C»

The obtained heat-treated raw coke composition was crushed with a hammer type mill such that the average particle diameter measured by a laser diffraction type particle size distribution measuring device was set to be in a range of 19.5 to 20.5 μm, thereby obtaining heat-treated raw coke powder of Comparative Example 7.

«Step D»

The heat-treated raw coke powder of Comparative Example 7 was graphitized by the same method as in Example 1 to obtain graphite powder.

«Step E»

The obtained graphite powder was crushed with an air flow jet mill such that the average particle diameter thereof measured by a laser diffraction type particle size distribution measuring device was set to be in a range of 9.5 to 10.5 $\mu$m, thereby obtaining an artificial graphite material for a lithium ion secondary battery negative electrode of Comparative Example 7.

(Comparative Example 8)

<<Production of raw material oil composition>>

The aromatic content of the fluid catalytic cracking residual oil obtained in Example 1 and the hydrodesulfurized oil obtained in Example 2 were mixed at a mass ratio of 15:85, thereby obtaining a raw material oil composition of Comparative Example 8.

«Step A»

The raw material oil composition of comparative Example 8 was subjected to a coking treatment for coking by the same method as in Example 1, thereby obtaining a raw coke composition.

«Step B»

The obtained raw coke composition was heated at 550°C in a nitrogen gas stream, thereby obtaining a heat-treated raw coke composition.
A treatment of setting the heating time from room temperature to 550°C to 1 hour, the holding time of holding the temperature at 550°C to 1 hour, and the cooling time from 550°C to 400°C to 1 hour and allowing the composition to be naturally cooled for 4 hours while maintaining the nitrogen gas stream after the temperature reached 400°C was performed as the heat treatment method.

«Step C»

The obtained heat-treated raw coke composition was crushed with a hammer type mill such that the average particle diameter measured by a laser diffraction type particle size distribution measuring device was set to be in a range of 19.5 to 20.5 $\mu$m, thereby obtaining heat-treated raw coke powder of Comparative Example 8.

«Step D»

The heat-treated raw coke powder of Comparative Example 8 was graphitized by the same method as in Example 1 to obtain graphite powder.

«Step E»

The obtained graphite powder was crushed with an air flow jet mill such that the average particle diameter thereof measured by a laser diffraction type particle size distribution measuring device was set to be in a range of 9.5 to 10.5 $\mu$m, thereby obtaining an artificial graphite material for a lithium ion secondary battery negative electrode of Comparative Example 8.

(Example 6)

An artificial graphite material for a lithium ion secondary battery negative electrode of Example 6, consisting of a mixture obtained by mixing the artificial graphite material obtained in Example 1 and the artificial graphite material obtained in Comparative Example 3 at a mass ratio of 50:50, was obtained.

(Example 7)

An artificial graphite material for a lithium ion secondary battery negative electrode of Example 7, consisting of a mixture obtained by mixing the artificial graphite material obtained in Example 1 and the artificial graphite material obtained in Comparative Example 3 at a mass ratio of 30:70, was obtained.

(Example 8)

An artificial graphite material for a lithium ion secondary battery negative electrode of Example 8, consisting of a mixture obtained by mixing the artificial graphite material obtained in Example 1 and the artificial graphite material obtained in Comparative Example 3 at a mass ratio of 20:80, was obtained.

<Preparation of battery for evaluation (1)>

The lithium ion secondary battery 10 shown in Fig. 1 was prepared as a battery for evaluation according to the method described below. As the negative electrode 11, the negative electrode current collector 12, the positive electrode 13, the positive electrode current collector 14, and the separator 15, those described below were used.

(Negative electrode 11 and negative electrode current collector 12)

Any of the artificial graphite materials obtained in Examples 1 to 8 and Comparative Example 1 to 8, a carboxymethyl cellulose (CMC (BSH-6, manufactured by DKS Co., Ltd.)) aqueous solution as a binding agent adjusted to have a concentration of 1.5% by mass, and an aqueous solution in which styrene-butadiene rubber (SBR) as a binding agent was dispersed at a concentration of 48% by mass were mixed at a solid content mass ratio of 98:1:1, thereby obtaining a paste-like negative electrode mixture.

The entire one surface of copper foil having a thickness of 18 $\mu$m serving as the negative electrode current collector 12 was coated with the obtained negative electrode mixture, dried, and rolled to obtain a negative electrode sheet in which the negative electrode 11 which was a layer formed of the negative electrode mixture was formed on the negative electrode current collector 12.

The amount of the negative electrode mixture applied onto the negative electrode sheet per unit area was adjusted such that the mass of the graphite material reached approximately 9.4 mg/cm$^2$.

Thereafter, the negative electrode sheet was cut into a width of 32 mm and a length of 52 mm. Further, a part of the negative electrode 11 was scraped off in a direction perpendicular to the longitudinal direction of the sheet to expose the negative electrode current collector 12 functioning as a negative electrode lead plate.

(Positive electrode 13 and positive electrode current collector 14)

Lithium cobaltate LiCoO$_2$ (CELLSEED (registered trademark) C10N, manufactured by Nippon Chemical Industrial Co., Ltd.) having an average particle diameter of 10 $\mu$m as a positive electrode material, polyvinylidene fluoride (KF# 1120, manufactured by Kureha Corporation) as a binding agent, and acetylene black (DENKA BLACK (registered trademark), manufactured by Denka Co., Ltd.) as a conductive assistant were mixed at a mass ratio of 89:6:5, and N-methyl-2-pyrrolidinone was added thereto as a solvent so that the mixture was kneaded, thereby obtaining a paste-like positive electrode mixture.

The entire one surface of aluminum foil having a thickness of 30 $\mu$m serving as the positive electrode current collector 14 was coated with the obtained positive electrode mixture, dried, and rolled to obtain a positive electrode sheet in which the positive electrode 13 which was a layer formed of the positive electrode mixture was formed on the positive electrode current collector 14.

The amount of the positive electrode mixture applied onto the positive electrode sheet per unit area was adjusted such that the mass of the lithium cobaltate reached approximately 20 mg/cm$^2$.

Thereafter, the positive electrode sheet was cut into a width of 30 mm and a length of 50 mm. Further, a part of the positive electrode 13 was scraped off in a direction perpendicular to the longitudinal direction of the sheet to expose the positive electrode current collector 14 functioning as a positive electrode lead plate.

(Separator 15)

As the separator 15, cellulose-based non-woven fabric (TF40-50, manufactured by Nippon Kodoshi Corporation) was used. First, the negative electrode sheet in which the negative electrode 11, the negative electrode current collector 12, and the negative electrode lead plate were integrated with each other, the positive electrode sheet in which the positive electrode 13, the positive electrode current collector 14, and the positive electrode lead plate were integrated with each other, the separator 15, and other members used for the lithium ion secondary battery 10 were dried in order to prepare the lithium ion secondary battery 10 shown in Fig. 1. Specifically, the negative electrode sheet and the positive electrode sheet were dried at 120°C under reduced pressure for 12 hours or longer. Further, the separator 15 and other members were dried at 70°C under reduced pressure for 12 hours or longer.

Next, the negative electrode sheet, the positive electrode sheet, the separator 15, and other members which had been dried were assembled in an argon gas circulation type glove box at which the dew point was controlled to -60°C or lower. In this manner, as shown in Fig. 1, the positive electrode 13 and the negative electrode 11 were laminated so as to face each other through the separator 15 to obtain a single-layer electrode body fixed with polyimide tape (not shown). Further, the negative electrode sheet and the positive electrode sheet were laminated such that the peripheral edge portion of the laminated positive electrode sheet was disposed to be surrounded by the inside of the peripheral edge portion of the negative electrode sheet.

Next, the single-layer electrode body was accommodated in the aluminum laminate exterior 16, and an electrolytic solution was injected thereinto. An electrolytic solution obtained by dissolving lithium hexafluorophosphate ($LiPF_6$) as an electrolyte in a solvent at a concentration of 1 mol/L and further mixing vinylene carbonate (VC) with the solution at a concentration of 1% by mass was used as the electrolytic solution. A solvent obtained by mixing ethylene carbonate (EC) and ethyl methyl carbonate (EMC) at a volume ratio of 3:7 was used as the solvent.

Thereafter, the aluminum laminate exterior 16 was heat-fused in a state where the positive electrode lead plate and the negative electrode lead plate protruded. By performing the above-described steps, the sealed lithium ion secondary batteries 10 of Examples 1 to 8 and Comparative Examples 1 to 8 were obtained.

<Charge and discharge test of battery for evaluation (1)>

A charge and discharge test described below was performed on each of the lithium ion secondary batteries 10 of Examples 1 to 8 and Comparative Examples 1 to 8.

First, a preliminary test for detecting abnormalities in the batteries was performed. That is, each battery was placed in a thermostatic chamber at 25°C, charged with a constant current of 4 mA until the battery voltage reached 4.2 V, paused for 10 minutes, and discharged with the same constant current until the battery voltage reached 3.0 V. These charge, pause, and discharge were defined as one charge and discharge cycle, and the preliminary test was performed by repeating the charge and discharge cycle three times under the same conditions.

By performing this preliminary test, it was confirmed that all the batteries of Examples 1 to 8 and Comparative Examples 1 to 8 did not have abnormalities. Thereafter, the following main test was performed. In addition, the preliminary test is not included in the number of cycles of the main test.

In the main test, each battery was placed in a thermostatic chamber at 25°C, charged with a constant current at a constant voltage by setting the charging current to 30 mA, the charging voltage to 4.2 V, and the charging time to 3 hours, paused for 10 minutes, and discharged with the same charging current (30 mA) at a constant current until the battery voltage reached 3.0 V. These charge, pause, and discharge were defined as one charge and discharge cycle, and the discharge capacity in the third cycle was defined as the "initial discharge capacity" by repeating the charge and discharge cycle three times under the same conditions.

Next, the battery was placed in a thermostatic chamber at a set temperature of - 10°C and allowed to stand still for 5 hours, and the charge and discharge cycle was repeated 100 times under the same conditions as those for the charge and discharge cycle from which the initial discharge capacity was acquired. Thereafter, the battery was placed in a thermostatic chamber at 25°C again and allowed to stand still for 5 hours, the charge and discharge cycle was repeated three times under the same conditions as those for the charge and discharge cycle from which the initial discharge capacity was acquired, and the discharge capacity in the third cycle was defined as "discharge capacity after the battery was repeatedly charged and discharged at a temperature of -10°C".

As an index showing the capacity degradation after the battery was repeatedly charged and discharged at a temperature of -10°C, the retention rate (%) of "discharge capacity after the battery was repeatedly charged and discharged at -10°C" with respect to the "initial discharge capacity" described above was calculated based on the following (Formula 1). The results thereof are listed in Table 1.

Retention rate (%) of "discharge capacity after the battery was repeatedly charged and discharged at -10°C = [(Discharge capacity after the battery was repeatedly charged and discharged at a temperature of -10°C)/(Initial discharge capacity)] × 100    (Formula 1)

[Table 1]

| Example | Raw material oil composition | | Heat-treated heat-treated raw coke powder | | Artificial graphite material for lithium ion secondary battery negative electrode | | | | Battery characteristic |
|---|---|---|---|---|---|---|---|---|---|
| | Vormal paraffin content (wt%) | Aromatic index fa | Volatile content (%) | True density (g/cm$^3$) | L (112) (nm) | Nitrogen adsorption specific surface area S (BET) (m$^2$/g) | ESR absorption intensity I (4.8 K) (Spins × 10$^{18}$g) | $\frac{I(4.8\,K)}{S(BET)}$ (Spins × 10$^{17}$/m$^2$) | Discharge capacity retention rate after battery is repeatedly charged and discharged at -10°C (%) |
| Example 1 | 9.8 | 0.47 | 0.92 | 1.39 | 21 | 5.2 | 2.9 | 5.6 | 78.2 |
| Example 2 | 5 | 0.65 | 0.1 | 1.68 | 25 | 4.9 | 3 | 6.1 | 73.7 |
| Example 3 | 5.2 | 0.37 | 0.32 | 1.33 | 18 | 5.1 | 2.7 | 5.3 | 75.4 |
| Example 4 | 17 | 0.62 | 3.31 | 1.56 | 23 | 5.2 | 3.3 | 6.3 | 70.1 |
| Example 5 | 20 | 0.3 | 3.6 | 1.26 | 17 | 4.9 | 3.1 | 6.3 | 68.5 |
| Comparative Example 1 | 9.8 | 0.47 | 3.71 | 1.41 | 20 | 4.8 | 3.4 | 7.1 | 45.6 |
| Comparative Example 2 | 9.8 | 0.47 | 0.08 | 1.91 | 19 | 5.2 | 3.9 | 7.5 | 30.2 |
| Comparative Example 3 | 9.8 | 0.47 | 5.13 | 1.39 | 22 | 5.1 | 3.6 | 7.1 | 43.4 |
| Comparative Example 4 | 18 | 0.22 | 2.66 | 1.22 | 16 | 5.0 | 3.5 | 7.0 | 36.7 |
| Comparative Example 5 | 3.2 | 0.48 | 1.68 | 1.73 | 20 | 4.9 | 3.5 | 7.1 | 34.6 |
| Comparative Example 6 | 8.1 | 0.72 | 0.49 | 1.78 | 24 | 5.0 | 3.6 | 7.2 | 41.3 |
| Comparative Example 7 | 3.8 | 0.76 | 0.07 | 1.79 | 23 | 5.2 | 3.7 | 7.1 | 38.8 |
| Comparative Example 8 | 24 | 0.18 | 3.87 | 1.19 | 15 | 5.1 | 3.8 | 7.5 | 28.2 |
| Example 6 | - - - | - - - | - - - | - - - | - - - | - - - | - - - | - - - | 75.1 |
| Example 7 | - - - | - - - | - - - | - - - | - - - | - - - | - - - | - - - | 71.3 |

EP 4 170 745 A1

| Example | Raw material oil composition | | Heat-treated heat-treated raw coke powder | | Artificial graphite material for lithium ion secondary battery negative electrode | | | | Battery characteristic |
|---|---|---|---|---|---|---|---|---|---|
| | Vormal paraffin content (wt%) | Aromatic index fa | Volatile content (%) | True density (g/cm$^3$) | L (112) (nm) | Nitrogen adsorption specific surface area S (BET) (m$^2$/g) | ESR absorption intensity I (4.8 K) (Spins $\times$ 10$^{18}$g) | $\frac{I\,(4.8\,K)}{S\,(BET)}$ (Spins $\times$ 10$^{17}$/m$^2$) | Discharge capacity retention rate after battery is repeatedly charged and discharged at -10°C (%) |
| Example 8 | - - - | - - - | - - - | - - - | - - - | - - - | - - - | - - - | 67.5 |

As listed in Table 1, in the negative electrodes of the lithium ion secondary batteries of Examples 1 to 8, the heat-treated heat-treated raw coke powder in which the volatile content was less than 3.71% and the true density of greater than 1.22 $g/cm^3$ and less than 1.73 $g/cm^3$ was used, and the artificial graphite material obtained by the production method of the present invention was used.

In the lithium ion secondary batteries of Examples 1 to 8, "discharge capacity retention rate (%) after the battery was repeatedly charged and discharged at -10°C" was 67% or greater. As described above, it was confirmed that in the lithium ion secondary battery using the negative electrode containing the artificial graphite material obtained by the production method of the present invention, the discharge capacity was unlikely to be degraded even in a case where the charge and discharge cycles were repeated at a temperature of -10°C.

As listed in Table 1, in each of the lithium ion secondary batteries of Examples 1 to 8, "discharge capacity retention rate after the battery was repeatedly charged and discharged at a temperature of -10°C" was 67.5% or greater. As described above, it was confirmed that in the lithium ion secondary batteries obtained by using the negative electrodes containing the artificial graphite materials for a lithium ion secondary battery negative electrode of Examples 1 to 8, the discharge capacity was unlikely to be degraded even in a case where the battery was rapidly and repeatedly charged.

On the contrary, an artificial graphite material obtained by using heat-treated heat-treated raw coke powder in which the volatile content was out of a range of less than 3.71% was used for the negative electrode of the lithium ion secondary battery of Comparative Example 1.

An artificial graphite material obtained by using heat-treated heat-treated raw coke powder in which the true density was out of a range of greater than 1.22 $g/cm^3$ and less than 1.73 $g/cm^3$ was used for each of the negative electrodes of the lithium ion secondary batteries of Comparative Examples 4, 5, and 6.

An artificial graphite material obtained by using heat-treated heat-treated raw coke powder in which the volatile content was out of a range of less than 3.71% and the true density was out of a range of greater than 1.22 $g/cm^3$ and less than 1.73 $g/cm^3$ was used for each of the negative electrodes of the lithium ion secondary batteries of Comparative Examples 2, 7, and 8.

An artificial graphite material obtained by using heat-treated raw coke powder which was not subjected to a heat treatment and in which the volatile content was out of a range of less than 3.71% was used for the negative electrode of the lithium ion secondary battery of Comparative Example 3.

In all the lithium ion secondary batteries of Comparative Examples 1 to 8, it was confirmed that "discharge capacity retention rate (%) after the battery was repeatedly charged and discharged at -10°C" was less than 46%, and the discharge capacity was easily degraded as compared with those in Examples 1 to 8.

(Example 9)

«Step A»

A raw coke composition was obtained in the same manner as in Example 1.

«Step B»

A heat-treated raw coke composition of Example 9 was obtained by the same method as in Example 1 except that a mixed gas having a volume ratio of nitrogen to oxygen of 83:17 was used in place of nitrogen gas in Example 1.

«Step C»

The obtained heat-treated raw coke composition of Example 9 was crushed with a hammer type mill such that the average particle diameter measured by a laser diffraction type particle size distribution measuring device was set to be in a range of 20.5 to 21.5 $\mu$m, thereby obtaining heat-treated raw coke powder of Example 9.

«Step D»

The heat-treated raw coke powder of Example 9 was put into a crucible consisting of graphite, the crucible was embedded in a packing coke serving as a heating material and a heat insulating material in an Acheson furnace, and the powder was graphitized at 2950°C. A treatment of setting the heating time from room temperature to 2950°C to 130 hours and the holding time of holding the temperature at 2950°C to 8 hours, allowing the powder to be naturally cooled for 25 days, and taking out the resultant was performed as the graphitization treatment, thereby obtaining graphite powder.

«Step E»

The obtained graphite powder was crushed with an air flow jet mill such that the average particle diameter thereof measured by a laser diffraction type particle size distribution measuring device was set to be in a range of 14.5 to 15.5 μm, thereby obtaining an artificial graphite material for a lithium ion secondary battery negative electrode of Example 9.

(Example 10)

«Step A»

A raw coke composition was obtained in the same manner as in Example 2.

«Step B»

A heat-treated raw coke composition of Example 10 was obtained by the same method as in Example 2 except that a mixed gas having a volume ratio of nitrogen to oxygen of 98:2 was used in place of nitrogen gas in Example 2.

«Step C»

The obtained heat-treated raw coke composition of Example 10 was crushed with a hammer type mill such that the average particle diameter measured by a laser diffraction type particle size distribution measuring device was set to be in a range of 14.5 to 15.5 μm, thereby obtaining heat-treated raw coke powder of Example 10.

«Step D»

The heat-treated raw coke powder of Example 10 was graphitized by the same method as in Example 1 to obtain graphite powder.

«Step E»

The obtained graphite powder was crushed with an air flow jet mill such that the average particle diameter thereof measured by a laser diffraction type particle size distribution measuring device was set to be in a range of 11.5 to 12.5 μm, thereby obtaining an artificial graphite material for a lithium ion secondary battery negative electrode of Example 10.

(Example 11)

«Step A»

A raw coke composition was obtained in the same manner as in Example 3.

«Step B»

A heat-treated raw coke composition of Example 11 was obtained by the same method as in Example 3 except that a mixed gas having a volume ratio of nitrogen to oxygen of 90: 10 was used in place of nitrogen gas in Example 3.

«Step C»

The obtained heat-treated raw coke composition of Example 11 was crushed with a hammer type mill such that the average particle diameter measured by a laser diffraction type particle size distribution measuring device was set to be in a range of 12.5 to 13.5 μm, thereby obtaining heat-treated raw coke powder of Example 11.

«Step D»

The heat-treated raw coke powder of Example 11 was put into a crucible consisting of graphite and graphitized at 2850°C in a nitrogen gas stream using a high-frequency induction furnace. A treatment of setting the heating time from room temperature to 2850°C to 23 hours and the holding time of holding the temperature at 2850°C to 3 hours, allowing the powder to be naturally cooled for 6 days, and taking out the resultant was performed as the graphitization treatment, thereby obtaining graphite powder.

«Step E»

The obtained graphite powder was crushed with an air flow jet mill such that the average particle diameter thereof measured by a laser diffraction type particle size distribution measuring device was set to be in a range of 8.5 to 9.5 µm, thereby obtaining an artificial graphite material for a lithium ion secondary battery negative electrode of Example 11.

(Example 12)

«Step A»

A raw coke composition was obtained in the same manner as in Example 4.

«Step B»

A heat-treated raw coke composition of Example 12 was obtained by the same method as in Example 4 except that a mixed gas having a volume ratio of nitrogen to oxygen of 83:17 was used in place of nitrogen gas in Example 4.

«Step C»

The obtained heat-treated raw coke composition of Example 12 was crushed with a hammer type mill such that the average particle diameter measured by a laser diffraction type particle size distribution measuring device was set to be in a range of 20.5 to 21.5 µm, thereby obtaining heat-treated raw coke powder of Example 12.

«Step D»

The heat-treated raw coke powder of Example 12 was put into a crucible consisting of graphite and graphitized at 2850°C in a nitrogen gas stream using a high-frequency induction furnace. A treatment of setting the heating time from room temperature to 2850°C to 23 hours and the holding time of holding the temperature at 2850°C to 3 hours, allowing the powder to be naturally cooled for 6 days, and taking out the resultant was performed as the graphitization treatment, thereby obtaining graphite powder.

«Step E»

The obtained graphite powder was crushed with an air flow jet mill such that the average particle diameter thereof measured by a laser diffraction type particle size distribution measuring device was set to be in a range of 10.5 to 11.5 µm, thereby obtaining an artificial graphite material for a lithium ion secondary battery negative electrode of Example 12.

(Example 13)

«Step A»

A raw coke composition was obtained in the same manner as in Example 5.

«Step B»

A heat-treated raw coke composition of Example 13 was obtained by the same method as in Example 3 except that a mixed gas having a volume ratio of nitrogen to oxygen of 83:17 was used in place of nitrogen gas in Example 5.

«Step C»

The obtained heat-treated raw coke composition was crushed with a hammer type mill such that the average particle diameter measured by a laser diffraction type particle size distribution measuring device was set to be in a range of 20.5 to 21.5 µm, thereby obtaining heat-treated raw coke powder of Example 13.

«Step D and Step E»

An artificial graphite material for a lithium ion secondary battery negative electrode of Example 13 was obtained by the same method as in Example 12 except that the heat-treated raw coke powder of Example 13 was used in place of the heat-treated raw coke powder of Example 12 and the powder was crushed by an air flow jet mill such that the average particle diameter was set to be in a range of 8.5 to 9.5 $\mu$m.

(Comparative Example 9)

«Step A»

A raw coke composition was obtained in the same manner as in Comparative Example 1.

<<Low-temperature heat treatment step>>

A heat-treated raw coke composition of Comparative Example 9 was obtained by the same method as in Comparative Example 1 except that a mixed gas having a volume ratio of nitrogen to oxygen of 83:17 was used in place of nitrogen gas in Comparative Example 1.

«Step C»

The obtained heat-treated raw coke composition of Comparative Example 9 was crushed with a hammer type mill such that the average particle diameter measured by a laser diffraction type particle size distribution measuring device was set to be in a range of 17.5 to 18.5 $\mu$m, thereby obtaining heat-treated raw coke powder of Comparative Example 9.

«Step D and Step E»

An artificial graphite material for a lithium ion secondary battery negative electrode of Comparative Example 9 was obtained by the same method as in Example 12 except that the heat-treated raw coke powder of Comparative Example 9 was used in place of the heat-treated raw coke powder of Example 12 and the powder was crushed by an air flow jet mill such that the average particle diameter was set to be in a range of 14.5 to 15.5 $\mu$m.

(Comparative Example 10)

«Step A»

A raw coke composition was obtained in the same manner as in Comparative Example 1.

<<High-temperature heat treatment step>>

A heat-treated raw coke composition of Comparative Example 10 was obtained by heating the composition at 750°C in a mixed gas stream with a volume ratio of nitrogen to oxygen of 99:1 in place of nitrogen gas in Comparative Example 2.

«Step C»

The obtained heat-treated raw coke composition of Comparative Example 10 was crushed with a hammer type mill such that the average particle diameter measured by a laser diffraction type particle size distribution measuring device was set to be in a range of 20.5 to 21.5 $\mu$m, thereby obtaining heat-treated raw coke powder of Comparative Example 10.

«Step D and Step E»

An artificial graphite material for a lithium ion secondary battery negative electrode of Comparative Example 10 was obtained by the same method as in Example 12 except that the heat-treated raw coke powder of Comparative Example 10 was used in place of the heat-treated raw coke powder of Example 12.

(Comparative Example 11)

«Step A»

A raw coke composition was obtained in the same manner as in Example 1.

«Heat treatment step»

In the method for producing the artificial graphite material for a lithium ion secondary battery negative electrode of Comparative Example 11, the raw coke composition was not subjected to the heat treatment.

«Step C»

The raw coke composition of Example 1 was crushed with a hammer type mill such that the average particle diameter measured by a laser diffraction type particle size distribution measuring device was set to be in a range of 17.5 to 18.5 $\mu$m, thereby obtaining heat-treated raw coke powder.

«Step D»

The heat-treated raw coke powder of Comparative Example 11 which was obtained above was graphitized by the same method as in Example 9 to obtain graphite powder.

«Step E»

The obtained graphite powder was crushed with an air flow jet mill such that the average particle diameter thereof measured by a laser diffraction type particle size distribution measuring device was set to be in a range of 12.5 to 13.5 $\mu$m, thereby obtaining an artificial graphite material for a lithium ion secondary battery negative electrode of Comparative Example 11.

(Comparative Example 12)

«Step A»

A raw coke composition was obtained in the same manner as in Comparative Example 4.

«Step B»

A heat-treated raw coke composition of Comparative Example 12 was obtained by the same method as in Comparative Example 4 except that a mixed gas having a volume ratio of nitrogen to oxygen of 83:17 was used in place of nitrogen gas in Comparative Example 4.

«Step C»

The obtained heat-treated raw coke composition of Comparative Example 12 was crushed with a hammer type mill such that the average particle diameter measured by a laser diffraction type particle size distribution measuring device was set to be in a range of 15.5 to 16.5 $\mu$m, thereby obtaining heat-treated raw coke powder of Comparative Example 12.

«Step D and Step E»

An artificial graphite material for a lithium ion secondary battery negative electrode of Comparative Example 12 was obtained by the same method as in Example 12 except that the heat-treated raw coke powder of Comparative Example 12 was used in place of the heat-treated raw coke powder of Example 12 and the powder was crushed by an air flow jet mill such that the average particle diameter was set to be in a range of 13.5 to 14.5 $\mu$m.

(Comparative Example 13)

«Step A»

A raw coke composition was obtained in the same manner as in Comparative Example 5.

«Step B»

A heat-treated raw coke composition of Comparative Example 13 was obtained by the same method as in Comparative Example 5 except that a mixed gas having a volume ratio of nitrogen to oxygen of 98:2 was used in place of nitrogen gas in Comparative Example 5.

«Step C»

The obtained heat-treated raw coke composition of Comparative Example 13 was crushed with a hammer type mill such that the average particle diameter measured by a laser diffraction type particle size distribution measuring device was set to be in a range of 20.5 to 21.5 $\mu$m, thereby obtaining heat-treated raw coke powder of Comparative Example 13.

«Step D»

The heat-treated raw coke powder of Comparative Example 13 was put into a crucible consisting of graphite and graphitized at 2850°C in a nitrogen gas stream using a high-frequency induction furnace. A treatment of setting the heating time from room temperature to 2850°C to 23 hours and the holding time of holding the temperature at 2850°C to 3 hours, allowing the powder to be naturally cooled for 6 days, and taking out the resultant was performed as the graphitization treatment, thereby obtaining graphite powder.

«Step E»

The obtained graphite powder was crushed with an air flow jet mill such that the average particle diameter thereof measured by a laser diffraction type particle size distribution measuring device was set to be in a range of 7.5 to 8.5 $\mu$m, thereby obtaining an artificial graphite material for a lithium ion secondary battery negative electrode of Comparative Example 13.

(Comparative Example 14)

«Step A»

A raw coke composition was obtained in the same manner as in Comparative Example 6.

«Step B»

A heat-treated raw coke composition of Comparative Example 14 was obtained by the same method as in Comparative Example 6 except that a mixed gas having a volume ratio of nitrogen to oxygen of 90:10 was used in place of nitrogen gas in Comparative Example 6.

«Step C»

The obtained heat-treated raw coke composition of Comparative Example 14 was crushed with a hammer type mill such that the average particle diameter measured by a laser diffraction type particle size distribution measuring device was set to be in a range of 18.5 to 19.5 $\mu$m, thereby obtaining heat-treated raw coke powder of Comparative Example 14.

«Step D»

The heat-treated raw coke powder of Comparative Example 14 was graphitized by the same method as in Example 9 to obtain graphite powder.

«Step E»

The obtained graphite powder was crushed with an air flow jet mill such that the average particle diameter thereof measured by a laser diffraction type particle size distribution measuring device was set to be in a range of 7.5 to 8.5 μm, thereby obtaining an artificial graphite material for a lithium ion secondary battery negative electrode of Comparative Example 14.

(Comparative Example 15)

«Step A»

A raw coke composition was obtained in the same manner as in Comparative Example 7.

«Step B»

A heat-treated raw coke composition of Comparative Example 15 was obtained by the same method as in Comparative Example 7 except that a mixed gas having a volume ratio of nitrogen to oxygen of 94:6 was used in place of nitrogen gas in Comparative Example 7.

«Step C»

The obtained heat-treated raw coke composition of Comparative Example 15 was crushed with a hammer type mill such that the average particle diameter measured by a laser diffraction type particle size distribution measuring device was set to be in a range of 20.5 to 21.5 μm, thereby obtaining heat-treated raw coke powder of Comparative Example 15.

«Step D»

The heat-treated raw coke powder of Comparative Example 15 was graphitized by the same method as in Example 9 to obtain graphite powder.

«Step E»

The obtained graphite powder was crushed with an air flow jet mill such that the average particle diameter thereof measured by a laser diffraction type particle size distribution measuring device was set to be in a range of 11.5 to 12.5 μm, thereby obtaining an artificial graphite material for a lithium ion secondary battery negative electrode of Comparative Example 15.

(Comparative Example 16)

«Step A»

A raw coke composition was obtained in the same manner as in Comparative Example 8.

«Step B»

A heat-treated raw coke composition of Comparative Example 16 was obtained by the same method as in Comparative Example 8 except that a mixed gas having a volume ratio of nitrogen to oxygen of 83:17 was used in place of nitrogen gas in Comparative Example 8.

«Step C»

The obtained heat-treated raw coke composition of Comparative Example 16 was crushed with a hammer type mill such that the average particle diameter measured by a laser diffraction type particle size distribution measuring device was set to be in a range of 17.5 to 18.5 μm, thereby obtaining heat-treated raw coke powder of Comparative Example 16.

«Step D»

The heat-treated raw coke powder of Comparative Example 16 was put into a crucible consisting of graphite and graphitized at 2850°C in a nitrogen gas stream using a high-frequency induction furnace. A treatment of setting the heating time from room temperature to 2850°C to 23 hours and the holding time of holding the temperature at 2850°C to 3 hours, allowing the powder to be naturally cooled for 6 days, and taking out the resultant was performed as the graphitization treatment, thereby obtaining graphite powder.

«Step E»

The obtained graphite powder was crushed with an air flow jet mill such that the average particle diameter thereof measured by a laser diffraction type particle size distribution measuring device was set to be in a range of 10.5 to 11.5 $\mu$m, thereby obtaining an artificial graphite material for a lithium ion secondary battery negative electrode of Comparative Example 16.

(Example 14)

An artificial graphite material for a lithium ion secondary battery negative electrode of Example 14, consisting of a mixture obtained by mixing the artificial graphite material obtained in Example 9 and the artificial graphite material obtained in Comparative Example 11 at a mass ratio of 50:50, was obtained.

(Example 15)

An artificial graphite material for a lithium ion secondary battery negative electrode of Example 15, consisting of a mixture obtained by mixing the artificial graphite material obtained in Example 9 and the artificial graphite material obtained in Comparative Example 11 at a mass ratio of 30:70, was obtained.

(Example 16)

An artificial graphite material for a lithium ion secondary battery negative electrode of Example 16, consisting of a mixture obtained by mixing the artificial graphite material obtained in Example 9 and the artificial graphite material obtained in Comparative Example 11 at a mass ratio of 20:80, was obtained.
Further, the size L (112) of the crystallite, the nitrogen adsorption specific surface area S (BET), the ESR signal intensity I (4.8 K) at a temperature of 4.8 K, and ratio I (4.8 K)/S (BET) of each artificial graphite material for a lithium ion secondary battery negative electrode of Examples 9 to 13 and Comparative Examples 9 to 16 were acquired by the same methods as in Example 1. The results are listed in Table 2.

<Preparation of battery for evaluation (2)>

The sealed lithium ion secondary batteries 10 of Examples 9 to 16 and Comparative Examples 9 to 16 were obtained in the same manner as in "Preparation of battery for evaluation (1)" except that any of artificial graphite materials obtained in Examples 9 to 16 and Comparative Examples 9 to 16 were used in place of any of the artificial graphite materials obtained in Examples 1 to 8 and Comparative Examples 1 to 8, a composite oxide NCM523 (manufactured by Beijing Easpring Material Technology Co., Ltd.) of nickel, cobalt, manganese, and lithium with an average particle diameter of 12 $\mu$m was used in place of lithium cobaltate $LiCoO_2$ with an average particle diameter of 10 $\mu$m as a positive electrode material, the amount of the positive electrode mixture applied onto the positive electrode sheet per unit area was adjusted such that the mass of NCM523 reached approximately 17.2 mg/cm$^2$, and a solvent obtained by mixing ethylene carbonate (EC), dimethyl carbonate (DMC), and ethyl methyl carbonate (EMC) at a volume ratio of 3:4:3 was used in place of a solvent obtained by mixing ethylene carbonate (EC) and ethyl methyl carbonate (EMC) at a volume ratio of 3:7 as the solvent of the electrolytic solution.

<Charge and discharge test of battery for evaluation (2)>

The lithium ion secondary batteries 10 of Examples 9 to 16 and Comparative Examples 9 to 16 were evaluated in the same manner as in the section of "Charge and discharge test of battery for evaluation (1)". The results are listed in Table 2.

[Table 2]

| Example | Raw material oil composition | | Heat-treated heat-treated raw coke powder | | Artificial graphite material for lithium ion secondary battery negative electrode | | | | Battery characteristic |
|---|---|---|---|---|---|---|---|---|---|
| | Normal paraffin content (wt%) | Aromatic index fa | Volatile content (%) | True density (g/cm$^3$) | L (112) (nm) | Nitrogen adsorption specific surface area 5 (BET) (m$^2$/g) | ESR absorption intensity I (4.8 K) (Spins $\times$ 10$^{18}$/g) | $\frac{I(4.8\,K)}{S\,(BET)}$ (Spins $\times$ 10$^{17}$/m$^2$) | Discharge capacity retention rate after battery is repeatedly charged and discharged at -10°C (%) |
| Example 9 | 9.8 | 0.47 | 0.92 | 1.39 | 24 | 4.2 | 2.6 | 6.2 | 87.5 |
| Example 10 | 5 | 0.65 | 0.1 | 1.68 | 30 | 2.5 | 1.7 | 6.8 | 82.5 |
| Example 11 | 5.2 | 0.37 | 0.32 | 1.33 | 18 | 2.8 | 1.5 | 5.4 | 84.4 |
| Example 12 | 17 | 0.62 | 3.31 | 1.56 | 12 | 5.6 | 3.8 | 6.8 | 78.4 |
| Example 1 | 20 | 0.3 | 3.6 | 1.26 | 8 | 6.2 | 3.2 | 5.2 | 76.6 |
| Comparative Example 9 | 9.8 | 0.47 | 3.71 | 1.41 | 22 | 22 | 1.7 | 7.7 | 64.0 |
| Comparative Example 10 | 9.8 | 0.47 | 0.08 | 1.91 | 23 | 5.2 | 3.9 | 7.5 | 42.4 |
| Comparative Example 11 | 9.8 | 0.47 | 5.13 | 1.39 | 26 | 3.4 | 2.7 | 7.9 | 60.9 |
| Comparative Example 12 | 18 | 0.22 | 2.66 | 1.22 | 12 | 2.1 | 1.3 | 6.2 | 51.5 |
| Comparative Example 13 | 3.2 | 0.48 | 1.68 | 1.73 | 19 | 7.2 | 4.5 | 6.3 | 48.6 |
| Comparative Example 14 | 8.1 | 0.72 | 0.49 | 1.78 | 26 | 6.9 | 3.3 | 4.8 | 58.0 |
| Comparative Example 15 | 3.8 | 0.76 | 0.07 | 1.79 | 28 | 5.9 | 2.6 | 4.4 | 54.5 |
| Comparative Example 16 | 24 | 0.18 | 3.87 | 1.19 | 4 | 4.5 | 2.1 | 3.7 | 39.6 |
| Example 14 | - - - | - - - | - - - | - - - | - - - | - - - | - - - | - - - | 84.0 |
| Example 15 | - - - | - - - | - - - | - - - | - - - | - - - | - - - | - - - | 79.8 |

| Example | Raw material oil composition | | Heat-treated heat-treated raw coke powder | | Artificial graphite material for lithium ion secondary battery negative electrode | | | | Battery characteristic |
|---|---|---|---|---|---|---|---|---|---|
| | Normal paraffin content (wt%) | Aromatic index fa | Volatile content (%) | True density (g/cm$^3$) | L (112) (nm) | Nitrogen adsorption specific surface area 5 (BET) (m$^2$/g) | ESR absorption intensity I (4.8 K) (Spins $\times$ 10$^{18}$/g) | $\frac{I(4.8\,K)}{S(BET)}$ (Spins $\times$ 10$^{17}$/m$^2$) | Discharge capacity retention rate after battery is repeatedly charged and discharged at -10°C (%) |
| Example 16 | - - - | - - - | - - - | - - - | - - - | - - - | - - - | - - - | 75.5 |

As listed in Table 2, the negative electrodes of the artificial graphite materials in which the size L (112) of the crystallite calculated from the (112) diffraction line measured by the X-ray wide angle diffraction method was in a range of 4 to 30 nm, the nitrogen adsorption specific surface area S (BET) was in a range of 2.5 to 6.2 m$^2$/g, the artificial graphite material had an absorption spectrum derived from a carbon radical appearing near g = 2.0 by the electron spin resonance method measured using an X band, the ratio I (4.8 K)/S (BET) of the spin density I (4.8 K) (spins/g) calculated from the signal intensity at a temperature of 4.8 K to S (BET) was in a range of $5.2 \times 10^{17}$ to $6.8 \times 10^{17}$ spins/m$^2$ were used as the negative electrodes of the lithium ion secondary batteries of Examples 9 to 16. Further, the heat-treated heat-treated raw coke powder having a volatile content of less than 3.71 % and a true density of greater than 1.22 g/cm$^3$ and less than 1.73 g/cm$^3$ was used, and the artificial graphite material obtained by the production method of the present invention was used.

In the lithium ion secondary batteries of Examples 9 to 16, "discharge capacity retention rate (%) after the battery was repeatedly charged and discharged at -10°C" was 75% or greater. As described above, it was confirmed that in the lithium ion secondary battery using the artificial graphite material of the present invention and the negative electrode containing the artificial graphite material obtained by the production method of the present invention, the discharge capacity was unlikely to be degraded even in a case where the charge and discharge cycles were repeated at a temperature of -10°C.

As listed in Table 2, in the lithium ion secondary batteries of Examples 9 to 16, "discharge capacity retention rate after the battery was repeatedly charged and discharged at -10°C" was 75.5% or greater. As described above, it was confirmed that in the lithium ion secondary battery using the negative electrodes containing the artificial graphite materials for a lithium ion secondary battery negative electrode of Examples 9 to 16, the discharge capacity was unlikely to be degraded even in a case where the battery was rapidly and repeatedly charged.

On the other hand, in the negative electrodes of the lithium ion secondary batteries of Comparative Examples 10, 11, 15, and 16, S (BET) was in the scope of the present invention, whereas 1 (4.8 K)/S (BET) was out of the scope of the present invention.

In the negative electrodes of the lithium ion secondary batteries of Comparative Examples 12 and 13, I (4.8 K)/S (BET) was in the scope of the present invention, whereas S (BET) was out of the scope of the present invention.

In the negative electrodes of the lithium ion secondary batteries of Comparative Examples 9 and 14, S (BET) and I (4.8 K)/S (BET) were out of the scope of the present invention.

In all the lithium ion secondary batteries of Comparative Examples 9 to 16, it was confirmed that "discharge capacity retention rate (%) after the battery was repeatedly charged and discharged at -10°C" was 64% or less, and the discharge capacity was likely to be degraded as compared with Examples 9 to 16.

Further, the artificial graphite material obtained by using heat-treated heat-treated raw coke powder in which the volatile content was out of a range of less than 3.71% was used for the negative electrode of the lithium ion secondary battery of Comparative Example 9.

The artificial graphite material obtained by using heat-treated heat-treated raw coke powder in which the true density was out of a range of greater than 1.22 g/cm$^3$ and less than 1.73 g/cm$^3$ was used for the negative electrodes of the lithium ion secondary batteries of Comparative Examples 12, 13, and 14.

The artificial graphite material obtained by using heat-treated heat-treated raw coke powder in which the volatile content was out of a range of less than 3.71% and the true density was out of a range of greater than 1.22 g/cm$^3$ and less than 1.73 g/cm$^3$ was used for the negative electrodes of the lithium ion secondary batteries of Comparative Examples 10, 15, and 16.

The artificial graphite material obtained by using heat-treated raw coke powder which was not subjected to the heat treatment and in which the volatile content was out of a range of less than 3.71% was used for the negative electrode of the lithium ion secondary battery of Comparative Example 11.

[Industrial Applicability]

The lithium ion secondary battery having the negative electrode containing the artificial graphite material obtained by the method for producing the artificial graphite material for a lithium ion secondary battery negative electrode according to the present invention has a discharge capacity that is unlikely to be degraded even in a case where the battery is repeatedly charged and discharged at a low temperature of -10°C. Therefore, the lithium ion secondary battery having the negative electrode containing the artificial graphite material obtained by the method for producing the artificial graphite material for a lithium ion secondary battery negative electrode according to the present invention can be preferably used for industrial purposes such as applications for automobiles such as hybrid automobiles, plug-in hybrid automobiles, and electric automobiles and power storage of system infrastructures.

[Reference Signs List]

10: Lithium ion secondary battery
11: Negative electrode
12: Negative electrode current collector
13: Positive electrode
14: Positive electrode current collector
15: Separator
16: Aluminum laminate exterior

**Claims**

1. A method for producing an artificial graphite material for a lithium ion secondary battery negative electrode, comprising at least:

   a step of performing a coking treatment on a raw material oil composition by performing a delayed coking process to generate a raw coke composition;
   a step of performing a heat treatment on the raw coke composition to obtain a heat-treated raw coke composition;
   a step of crushing the heat-treated raw coke composition to obtain heat-treated raw coke powder;
   a step of graphitizing the heat-treated raw coke powder to obtain graphite powder; and
   a step of crushing the graphite powder,
   wherein a volatile content of the heat-treated raw coke powder is less than 3.71%, and
   a true density of the heat-treated raw coke powder is greater than 1.22 g/cm$^3$ and less than 1.73 g/cm$^3$.

2. The method for producing an artificial graphite material for a lithium ion secondary battery negative electrode according to Claim 1,
   wherein a temperature of the heat treatment in the step of obtaining the heat-treated raw coke composition is 500°C or higher and 700°C or lower.

3. The method for producing an artificial graphite material for a lithium ion secondary battery negative electrode according to Claim 1 or 2,

   wherein a content of normal paraffin in the raw material oil composition is in a range of 5% to 20% by mass, and
   an aromatic index fa acquired by a knight method is in a range of 0.3 to 0.65.

4. A negative electrode for a lithium ion secondary battery, comprising:
   an artificial graphite material obtained by the production method according to any one of Claims 1 to 3.

5. A lithium ion secondary battery comprising:
   the negative electrode according to Claim 4.

6. An artificial graphite material for a lithium ion secondary battery negative electrode,

   wherein a nitrogen adsorption specific surface area S (BET) thereof is in a range of 2.5 to 6.2 m$^2$/g,
   the artificial graphite material has an absorption spectrum derived from a carbon radical appearing near g = 2.0 by an electron spin resonance method using an X band, and
   a ratio I (4.8 K)/S (BET) of a spin density I (4.8 K) (spins/g) calculated from a signal intensity at a temperature of 4.8 K to S (BET) is in a range of $5.2 \times 10^{17}$ to $6.8 \times 10^{17}$ spins/m$^2$.

FIG. 1

## INTERNATIONAL SEARCH REPORT

| | International application No. |
|---|---|
| | PCT/JP2021/023198 |

**A. CLASSIFICATION OF SUBJECT MATTER**
H01M 4/133(2010.01)i; H01M 4/1393(2010.01)i; H01M 4/587(2010.01)i; C01B 32/205(2017.01)i
FI: H01M4/587; H01M4/133; C01B32/205; H01M4/1393
According to International Patent Classification (IPC) or to both national classification and IPC

**B. FIELDS SEARCHED**

Minimum documentation searched (classification system followed by classification symbols)
H01M4/133; H01M4/1393; H01M4/587; C01B32/205

Documentation searched other than minimum documentation to the extent that such documents are included in the fields searched
Published examined utility model applications of Japan 1922–1996
Published unexamined utility model applications of Japan 1971–2021
Registered utility model specifications of Japan 1996–2021
Published registered utility model applications of Japan 1994–2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2007-019257 A (JAPAN ENERGY CORP.) 25 January 2007 (2007-01-25) claims, paragraphs [0001], [0018], [0029], [0039], [0042], [0056]–[0057] | 1–6 |
| Y | WO 2015/147012 A1 (HITACHI CHEMICAL CO., LTD.) 01 October 2015 (2015-10-01) paragraph [0072] | 1–6 |
| Y | JP 9-231974 A (NIPPON CARBON CO., LTD.) 05 September 1997 (1997-09-05) claims, paragraph [0024] | 1–6 |
| Y | JP 10-241679 A (KANSAI COKE AND CHEMICALS COMPANY, LIMITED) 11 September 1998 (1998-09-11) paragraph [0039] | 1–6 |
| Y | WO 2011/034152 A1 (JX NIPPON OIL & ENERGY CORPORATION) 24 March 2011 (2011-03-24) paragraphs [0015], [0038]–[0050] | 3 |

☒ Further documents are listed in the continuation of Box C.  ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 18 August 2021 (18.08.2021) | 31 August 2021 (31.08.2021) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2021/023198 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2005-154242 A (MITSUBISHI CHEMICAL CORP.) 16 June 2005 (2005-06-16) paragraphs [0035], [0041]-[0044], [0058], [0061] | 1-6 |
| P, A | WO 2020/149252 A1 (JXTG NIPPON OIL & ENERGY CORPORATION) 23 July 2020 (2020-07-23) claims | 1-6 |

Form PCT/ISA/210 (continuation of second sheet) (January 2015)

**INTERNATIONAL SEARCH REPORT**
Information on patent family members

| International application no. |
| --- |
| PCT/JP2021/023198 |

| Patent Documents referred in the Report | Publication Date | Patent Family | Publication Date |
| --- | --- | --- | --- |
| JP 2007-019257 A | 25 Jan. 2007 | (Family: none) | |
| WO 2015/147012 A1 | 01 Oct. 2015 | US 2017/0110729 A1 paragraph [0103] US 2019/0058192 A1 EP 3131143 A1 KR 10-2016-0136320 A CN 106104871 A CN 108565463 A | |
| JP 9-231974 A | 05 Sep. 1997 | (Family: none) | |
| JP 10-241679 A | 11 Sep. 1998 | (Family: none) | |
| WO 2011/034152 A1 | 24 Mar. 2011 | US 2012/0171572 A1 paragraphs [0015], [0039]-[0051] US 2014/0079622 A1 EP 2479823 A1 CN 102511096 A KR 10-2012-0081114 A JP 2011-65961 A | |
| JP 2005-154242 A | 16 Jun. 2005 | (Family: none) | |
| WO 2020/149252 A1 | 23 Jul. 2020 | JP 2020-111489 A | |

Form PCT/ISA/210 (patent family annex) (January 2015)

44

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020105303 A

- JP 5415684 B

**Non-patent literature cited in the description**

- *The 51st Battery Symposium in Japan 3G15,* 08 November 2010
- *Journal of the Fuel Society of Japan,* 1979, vol. 58 (642), 257-263
- *Carbon,* 1981, (105), 73-81
- Determination of the Specific Surface Area of Powders (Solids) by Gas Adsorption-BET Method. *JIS Z,* 2013, 8830
- method of measuring lattice constant and crystallite size of artificial graphite material. *JIS R,* 2007, 7651
- Carbon Terminology Dictionary. Agne Shofusha, 05 October 2000, 354-355
- *Carbon,* 1966, vol. 47, 30-34
- *CARBON,* 1967, vol. 50, 20-25
- *Carbon,* vol. 1996 (175), 249-256
- Negative Electrode Carbon Material for Lithium Ion Secondary Battery. Realize Corporation, 20 October 1996, 3, , 4
- Coal and coke-methods for proximate analysis. *JIS M,* 2004, 8812
- Coke-test method. *JIS K,* 2004, 2151